# EUROPEAN PATENT APPLICATION

(11) **EP 4 156 798 A1**
(43) Date of publication of application: **29.03.2023**
(21) Application number: 21937193.7
(22) Date of filing: 04.08.2021
(51) Int. Cl.: H04W 52/02

(54) **PROCESSING METHOD, TERMINAL DEVICE, NETWORK DEVICE, AND STORAGE MEDIUM**

(71) Applicant: Shenzhen Transsion Holdings Co., Ltd., Shenzhen (CN)
(72) Inventor: ZHU, Rongchang, Shenzhen Guangdong 518057 (CN); HUANG, Junwei, Shenzhen Guangdong 518057 (CN)
(74) Representative: Osterhoff, Utz
(86) International application number: PCT/CN2021/110634
(87) International publication number: WO 2023/010349

(57) **Abstract**

Disclosed are a processing method, a terminal device, a network device, and a storage medium. The processing method is applied to the terminal device, and includes the following operations: receiving a PEI; indicating a monitoring state of at least one PO of at least one PF and/or an available state of TRS according to the PEl; and determining whether to monitor a paging message according to the monitoring state, and/or determining whether to perform time-frequency synchronization through the TRS according to the available state of the TRS. Through the above manner, during the process of receiving the paging message, the terminal device does not need to be in the wake-up state for a long time, so as to reduce power consumption.

## Description

### TECHNICAL FIELD

The present disclosure relates to the technical field of wireless communication, and in particular, to a processing method, a terminal device, a network device, and a storage medium.

### BACKGROUND

In the fifth generation (5G) cellular mobile communication system, the process of the user equipment (UE) for receiving the paging message includes: detecting physical downlink control channel (PDCCH) in the search space corresponding to the paging occasion (PO), and parsing downlink control information (DCI) carrying the paging scheduling information. If the DCI is successfully detected, physical downlink shared channel (PDSCH) resource based on the paging scheduling information in DCI to receive and demodulate the paging message. For the UE working with the discontinuous receiver, if the UE received paging message which include its own identity, it initiated the RRC connection, otherwise, it continued to sleep. If the DCI is not detected, it means that there is no paging message in the wake-up (DRX_on) cycle.

During the process of conceiving and realizing the present disclosure, the inventor found at least the following problems: during the process of receiving the paging message, the UE needs to detect the search space corresponding to each PO, the UE needs to be woken up frequently, or the time-frequency synchronization of the UE takes a long time, and the time for waking up the UE is long, resulting in a large power consumption of the UE.

The foregoing description is to provide general background information and does not necessarily constitute prior art.

### SUMMARY

In view of the above technical problems, the present disclosure provides a processing method, a terminal device, a network device and a storage medium, aiming to solve the technical problem that UE has high power consumption and no energy saving in the process of receiving paging messages.

In order to facilitate quick reading and understanding of the technical solutions of the present disclosure, the main English abbreviations mentioned in the claims of the present disclosure are described herein, and the descriptions are as follows:
Paging Early Indication (PEI);
Paging Frame (PF);
Paging Occasion (PO);
Tracking Reference Signal (TRS);
Discontinuous Reception (DRX).

PEI is an optional implementation of paging early indication. In order to clearly and concisely describe the technical solutions of the present disclosure, in the following embodiments of the processing method, terminal device, network device and computer storage medium of the present disclosure, PEI is used to refer to all possible paging early indication signals, but it is not limited that the paging early indication is only PEI. The paging early indication can also be a signal with the same indication function in other systems.

In order to solve the above technical problems, the present disclosure provides a processing method, applied to a terminal device, including the following operations:
A processing method, applied to a terminal device, characterized by comprising following operations:
S10, receiving a PEI;
S20, indicating a monitoring state of at least one PO of at least one PF and/or an available state of TRS according to the PEI; and
S30, determining whether to monitor a paging message according to the monitoring state, and/or determining whether to perform time-frequency synchronization through the TRS according to the available state of the TRS.

In an embodiment, before the operation S10, the method further includes:
S00, determining a PF of at least one group within at least one DRX cycle.

In an embodiment, the operation S100 includes:
determining the PF of at least one group within at least one DRX cycle based on a first number and/or a second number.

In an embodiment, the operation S30 includes at least one of the following:
indicating that at least one TRS of different PFs in at least one group is available;
monitoring at least one PO of different PFs in at least one group;
monitoring at least one PO of different PFs in at least one group and indicating that at least one TRS of different PFs in at least one group is available;
indicating that at least one TRS of different PFs in at least one group is not available;
not monitoring at least one PO of different PFs in at least one group;
not monitoring at least one PO of different PFs in at least one group and indicating that at least one TRS of different PFs in at least one group is not available;
monitoring at least one PO of different PFs in at least one group and not monitoring at least one PO of different PFs in at least one group;
indicating that at least one TRS of different PFs in at least one group is available and indicating that at least one TRS of different PFs in at least one group is not available;
monitoring at least one PO of different PFs in at least one group and indicating that at least one TRS of different PFs in at least one group is available, and not monitoring at least one PO of different PFs in at least one group and indicating that at least one TRS of different PFs in at least one group is available;
monitoring at least one PO of different PFs in at least one group and indicating that at least one TRS of different PFs in at least one group is available, and not monitoring at least one PO of different PFs in at least one group and indicating that at least one TRS of different PFs in at least one group is not available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is not available; and
not monitoring at least one PO of different PFs in at least one group and indicating that at least one TRS of different PFs in at least one group is available, and not monitoring at least one PO of different PFs in at least one group and indicating that at least one TRS of different PFs in at least one group is not available.

In an embodiment, the operation S20 includes:
S21, determining the monitoring state of at least one PO of at least one PF and/or the available state of the TRS within a same DRX cycle or different DRX cycles according to the PEI.

In an embodiment, the operation S21 includes at least one of the following:
when the PF within the DRX cycle is configured as a single group, parsing indication information in the PEI before each PO in a first PF of the single group, and determining the monitoring state of the PO and/or the available state of the TRS at a corresponding position of each PF of the single group; and
when the PF within the DRX cycle is configured as multiple groups, parsing indication information in the PEI before each PO in a first PF of each group, and respectively determining the monitoring state of the PO and/or the available state of the TRS at a corresponding position of each PF of each group.

In an embodiment, the operation S21 includes at least one of the following:
when the PF within the DRX cycle is configured as a single group, parsing indication information in the PEI before each PO in a first PF of the single group, and determining the monitoring state of the PO and/or the available state of the TRS at corresponding positions of multiple non-consecutive PFs selected by a predetermined rule of the single group; and
when the PF within the DRX cycle is configured as multiple groups, parsing indication information in the PEI before each PO in a first PF of each group, and respectively determining the monitoring state of the PO and/or the available state of the TRS at corresponding positions of multiple non-consecutive PFs selected by a predetermined rule of each group.

In an embodiment, the operation S10 includes:
receiving a PEI corresponding to a PO in at least one group of PFs of at least one DRX cycle.

In an embodiment, the operation S30 includes at least one of the following:
in response to the indication information identification unit in the PEI, monitoring the PO;
in response to the indication information identification unit in the PEI, synchronizing via the TRS;
in response to the indication information identification unit in the PEI, monitoring the PO and synchronizing via the TRS;
in response to the indication information identification unit in the PEI, not monitoring the PO;
in response to the indication information identification unit in the PEI, not synchronizing via the TRS; and
in response to the indication information identification unit in the PEI, not monitoring the PO and not synchronizing via the TRS.

The present disclosure further provides a processing method, applied to a terminal device, including following operations:
S100, when grouping information and indication information meet a preset condition, determining a monitoring state of at least one PO of a PF of at least one group and/or an available state of TRS according to the grouping information and the indication information; and
S200, determining whether to monitor a paging message according to the monitoring state, and/or determining whether to perform time-frequency synchronization through the TRS according to the available state of the TRS.

In an embodiment, the method for determining or generating the grouping information includes at least one of the following:
determining a PF of at least one group within at least one DRX cycle; and
generating the PF of at least one group within at least one DRX cycle based on a first number and/or a second number.

In an embodiment, meeting the preset condition includes at least one of the following:
at least one PF indicated by the indication information exists in the at least one group; and
the PEI carrying the indication information is before a corresponding PO in a first PF in a same group.

In an embodiment, the operation S200 includes at least one of the following:
indicating that at least one TRS of different PFs in at least one group is available;
monitoring at least one PO of different PFs in at least one group;
monitoring at least one PO of different PFs in at least one group and indicating that at least one TRS of different PFs in at least one group is available;
indicating that at least one TRS of different PFs in at least one group is not available;
not monitoring at least one PO of different PFs in at least one group;
not monitoring at least one PO of different PFs in at least one group and indicating that at least one TRS of different PFs in at least one group is not available;
monitoring at least one PO of different PFs in at least one group and not monitoring at least one PO of different PFs in at least one group;
indicating that at least one TRS of different PFs in at least one group is available and indicating that at least one TRS of different PFs in at least one group is not available;
monitoring at least one PO of different PFs in at least one group and indicating that at least one TRS of different PFs in at least one group is available, and not monitoring at least one PO of different PFs in at least one group and indicating that at least one TRS of different PFs in at least one group is available;
monitoring at least one PO of different PFs in at least one group and indicating that at least one TRS of different PFs in at least one group is available, and not monitoring at least one PO of different PFs in at least one group and indicating that at least one TRS of different PFs in at least one group is not available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is not available; and
not monitoring at least one PO of different PFs in at least one group and indicating that at least one TRS of different PFs in at least one group is available, and not monitoring at least one PO of different PFs in at least one group and indicating that at least one TRS of different PFs in at least one group is not available.

In an embodiment, the operation S100 includes:
S101, determining the PF of at least one group within at least one DRX cycle according to the grouping information; and
S102, determining the monitoring state of at least one PO of at least one PF of at least one group and/or the available state of the TRS within a same DRX cycle or different DRX cycles according to the indication information.

In an embodiment, the operation S102 includes at least one of the following:
when the PF within the DRX cycle is configured as a single group, parsing indication information in the PEI before each PO in a first PF of the single group, and determining the monitoring state of the PO and/or the available state of the TRS at a corresponding position of each PF of the single group; and
when the PF within the DRX cycle is configured as multiple groups, parsing indication information in the PEI before each PO in a first PF of each group, and respectively determining the monitoring state of the PO and/or the available state of the TRS at a corresponding position of each PF of each group.

In an embodiment, the operation S102 includes at least one of the following:
when the PF within the DRX cycle is configured as a single group, parsing indication information in the PEI before each PO in a first PF of the single group, and determining the monitoring state of the PO and/or the available state of the TRS at corresponding positions of multiple non-consecutive PFs selected by a predetermined rule of the single group; and
when the PF within the DRX cycle is configured as multiple groups, parsing indication information in the PEI before each PO in a first PF of each group, and respectively determining the monitoring state of the PO and/or the available state of the TRS at corresponding positions of multiple non-consecutive PFs selected by a predetermined rule of each group.

In an embodiment, the operation S200 includes at least one of the following:
in response to the indication information identification unit, monitoring the PO;
in response to the indication information identification unit, synchronizing via the TRS;
in response to indication information identification unit, monitoring the PO and synchronizing via the TRS;
in response to the indication information identification unit, not monitoring the PO;
in response to the indication information identification unit, not synchronizing via the TRS; and
in response to the indication information identification unit, not monitoring the PO and not synchronizing via the TRS.

The present disclosure further provides a processing method, applied to a network device, characterized by including following operations:
A10, sending a PEI to a terminal device, to make a terminal device determine a monitoring state of at least one PO of at least one PF and/or an available state of TRS according to indication information in the PEI;
the monitoring state is configured to indicate whether to monitor a paging message, and/or the available state of the TRS is configured to indicate whether to perform time-frequency synchronization through the TRS.

In an embodiment, before the operation A10, the method further includes:
A00, determining a grouping state of at least one DRX cycle.
In an embodiment, the operation A00 includes:
   determining a PF of at least one group within at least one DRX cycle based on a first number and/or a second number.

In an embodiment, the indication information is configured to indicate at least one of the following situations:
indicating that at least one TRS of different PFs in at least one group is available;
monitoring at least one PO of different PFs in at least one group;
monitoring at least one PO of different PFs in at least one group and indicating that at least one TRS of different PFs in at least one group is available;
indicating that at least one TRS of different PFs in at least one group is not available;
not monitoring at least one PO of different PFs in at least one group;
not monitoring at least one PO of different PFs in at least one group and indicating that at least one TRS of different PFs in at least one group is not available;
monitoring at least one PO of different PFs in at least one group and not monitoring at least one PO of different PFs in at least one group;
indicating that at least one TRS of different PFs in at least one group is available and indicating that at least one TRS of different PFs in at least one group is not available;
monitoring at least one PO of different PFs in at least one group and indicating that at least one TRS of different PFs in at least one group is available, and not monitoring at least one PO of different PFs in at least one group and indicating that at least one TRS of different PFs in at least one group is available;
monitoring at least one PO of different PFs in at least one group and indicating that at least one TRS of different PFs in at least one group is available, and not monitoring at least one PO of different PFs in at least one group and indicating that at least one TRS of different PFs in at least one group is not available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is not available; and
not monitoring at least one PO of different PFs in at least one group and indicating that at least one TRS of different PFs in at least one group is available, and not monitoring at least one PO of different PFs in at least one group and indicating that at least one TRS of different PFs in at least one group is not available.

In an embodiment, the PEI includes:
the monitoring state of at least one PO of at least one PF and/or the available state of TRS within a same DRX cycle or different DRX cycles.

In an embodiment, the operation A10 includes at least one of the following:
when the PF within the DRX cycle is configured as a single group, sending indication information in the PEI before each PO in a first PF of the single group, and indicating the monitoring state of the PO and/or the available state of the TRS at a corresponding position of each PF of the single group; and
when the PF within the DRX cycle is configured as multiple groups, sending indication information in the PEI before each PO in a first PF of each group, and respectively indicating the monitoring state of the PO and/or the available state of the TRS at a corresponding position of each PF of each group.

In an embodiment, the operation A10 includes at least one of the following:
when the PF within the DRX cycle is configured as a single group, sending indication information in the PEI before each PO in a first PF of the single group, and indicating the monitoring state of the PO and/or the available state of the TRS at corresponding positions of multiple non-consecutive PFs selected by a predetermined rule of the single group; and
when the PF within the DRX cycle is configured as multiple groups, sending indication information in the PEI before each PO in a first PF of each group, and respectively indicating the monitoring state of the PO and/or the available state of the TRS at corresponding positions of multiple non-consecutive PFs selected by a predetermined rule of each group.

In an embodiment, the operation A10 includes:
sending a PEI corresponding to a PO in at least one group of PFs of at least one DRX cycle.

In an embodiment, the method includes at least one of the following:
sending the paging message at the PO;
sending the TRS at the PO;
sending the paging message and the TRS at the PO;
not sending the paging message at the PO;
not sending the TRS at the PO;
not sending the paging message and the TRS at the PO;
sending the paging message and not sending the TRS at the PO; and
sending the TRS and not sending the paging message at the PO.

In an embodiment, if the indication information of the PEI includes both the PO indication and the TRS available indication, the TRS available indication is valid only when the PO indication needs to be monitored.

The present disclosure further provides a terminal device, including: a memory and a processor, a computer program is stored in the memory, and when the computer program is executed by the processor, the operations of the processing method as described above are implemented.

The present disclosure further provides a network device, including: a memory and a processor, a computer program is stored in the memory, and when the computer program is executed by the processor, the operations of the processing method as described above are implemented.

The present disclosure further provides a computer readable storage medium, a computer program is stored in the computer readable storage medium, and when the computer program is executed by a processor, the operations of the processing method as described above are implemented.

As described above, the present disclosure provides a processing method, applied to a terminal device, including: receiving a PEI; indicating a monitoring state of at least one PO of at least one PF and/or an available state of TRS according to the PEl; and determining whether to monitor a paging message according to the monitoring state, and/or determining whether to perform time-frequency synchronization through the TRS according to the available state of the TRS. During the process of receiving the paging message by the terminal device, the number of times the terminal device is woken up is reduced and/or the time for waking up the terminal device is shortened, the power consumption of the terminal device is reduced, and the battery life of the terminal device is improved.

### BRIEF DESCRIPTION OF THE DRAWINGS

The drawings herein are incorporated into the specification and constitute a part of the specification, show embodiments that conform to the present disclosure, and are used together with the specification to explain the principle of the present disclosure. In order to more clearly describe the technical solutions of the embodiments of the present disclosure, the following will briefly introduce the drawings that need to be used in the description of the embodiments. Obviously, those of ordinary skill in the art can obtain other drawings from these drawings without creative labor.
FIG. 1 is a schematic diagram of a hardware structure of a mobile terminal according to various embodiments of the present disclosure;
FIG. 2 is an architecture diagram of a communication network system according to an embodiment of the present disclosure;
FIG. 3 is a schematic flowchart of a processing method applied to the terminal device according to an embodiment of the present disclosure;
FIG. 4 is a schematic diagram of a scenario in which the PEI continuously indicates the monitoring state of PO;
FIG. 5 is a schematic diagram of a scenario in which the PEI discontinuously indicates the monitoring state of at least one PO of multiple PFs according to an embodiment of the present disclosure;
FIG. 6 is a schematic diagram of a scenario in which the PEI discontinuously indicates the monitoring state of at least one PO of multiple PFs according to another embodiment of the present disclosure;
FIG. 7 is a schematic diagram of a scenario in which the PEI discontinuously indicates the monitoring state of at least one PO of multiple PFs according to yet another embodiment of the present disclosure;
FIG. 8a is a first part of a schematic diagram of a scenario in which the PEI discontinuously indicates the monitoring state of at least one PO of multiple PFs according to still another embodiment of the present disclosure;
FIG. 8b is a second part of the schematic diagram in FIG. 8a;
FIG. 9 is a schematic diagram of a scenario in which the PEI discontinuously indicates the available state of the TRS corresponding to at least one PO of multiple PFs according to an embodiment of the present disclosure;
FIG. 10 is a schematic diagram of a scenario in which the PEI discontinuously indicates the available state of the TRS corresponding to at least one PO of multiple PFs according to another embodiment of the present disclosure;
FIG. 11a is a schematic diagram of the data structure of the indication information of PEI;
FIG. 11b is a schematic diagram of an indication logic scenario of an identification unit of PEI;
FIG. 12 is a schematic flowchart of a processing method applied to the terminal device according to another embodiment of the present disclosure;
FIG. 13 is a schematic flowchart of a processing method applied to a network device according to an embodiment of the present disclosure;
FIG. 14 is a schematic diagram of a scenario in which the PEI discontinuously indicates the monitoring state of at least one PO of multiple PFs and the available state of the corresponding TRS according to an embodiment of the present disclosure;
FIG. 15 is a schematic diagram of a scenario in which the PEI discontinuously indicates the monitoring state of at least one PO of multiple PFs and the available state of the corresponding TRS according to another embodiment of the present disclosure; and
FIG. 16 is a schematic diagram of a scenario in which the PEI discontinuously indicates the monitoring state of at least one PO of multiple PFs and the available state of the corresponding TRS according to yet another embodiment of the present disclosure.

The realization of the objective, functional characteristics, and advantages of the present disclosure are further described with reference to the accompanying drawings. Specific embodiments of the present disclosure have been shown by the above-mentioned drawings, and will be described in more detail hereinafter. These drawings and text descriptions are not intended to limit the scope of the concept of the present disclosure in any way, but to explain the concept of the present disclosure for those skilled in the art by referring to specific embodiments.

### DETAILED DESCRIPTION OF THE EMBODIMENTS

The exemplary embodiments will be described in detail herein, and examples thereof are shown in the accompanying drawings. When the following description refers to the drawings, unless indicated, the same numbers in different drawings indicate the same or similar elements. The implementation manners described in the following exemplary embodiments do not represent all implementation manners consistent with the present disclosure. On the contrary, they are merely examples of devices and methods consistent with some aspects of the present disclosure as detailed in the appended claims.

It should be noted that the terms "comprise", "include" or any variants thereof herein are intended to cover non-exclusive inclusion, such that a process, a method, an article, or a device that includes a series of elements includes not only those elements, but also other elements that are not explicitly listed, or includes elements inherent to the process, method, article, or device. Without more restrictions, the element defined by the sentence "including a..." does not exclude the existence of other identical elements in the process, method, article or device that includes the element. In addition, components, features, and elements with the same name in different embodiments of the present disclosure may have the same meaning or may have different meanings, the specific meaning thereof needs to be determined by the explanation in the specific embodiment or further combined with the context in the specific embodiment.

It should be understood that although the terms first, second, third, or the like, can be used herein to describe various information, the information should not be limited to these terms. These terms are only used to distinguish the same type of information from each other. For example, without departing from the scope of the present disclosure, a first information can also be referred to as a second information, and similarly, the second information can also be referred to as the first information. Depending on the context, the word "if" as used herein can be interpreted as "when", "while" or "in response to a determination". As used herein, the singular forms "a", "an", and "the" are intended to also include the plural, unless the context dictates to the contrary. It should be further understood that the terms "comprising" and "including" indicate the presence of the described features, steps, operations, elements, components, items, types, and/or groups, but do not exclude the existence, appearance or addition of one or more other features, steps, operations, elements, components, items, types, and/or groups. The terms "or" and "and/or" used herein are interpreted as inclusive or mean any one or any combination. Therefore, "A, B or C" or "A, B and/or C" means any of the following: A; B; C; A and B; A and C; B and C; A, B and C. An exception to this definition will only occur when the combination of elements, functions, steps or operations is inherently mutually exclusive in some way.

It should be understood that, although the steps in the flowchart in the embodiment of the present disclosure are displayed in sequence as indicated by the arrows, these steps are not necessarily executed in sequence in the order indicated by the arrows. Unless explicitly stated herein, the execution of these steps is not strictly limited in order, and the steps can be executed in other orders. Besides, at least part of the steps in the figure may include multiple sub-steps or multiple stages. These sub-steps or stages are not necessarily executed simultaneously, but can be executed at different times. The order of execution is not necessarily performed sequentially, but can be performed alternately or alternately with at least part of other steps or sub-steps or stages of other steps.

Depending on the context, the words "if" as used herein can be interpreted as "when" or "while" or "in response to determination" or "in response to detection". Similarly, depending on the context, the phrase "if determined" or "if detected (stated condition or event)" can be interpreted as "when determined" or "in response to determination" or "when detected (stated condition or event)" or "in response to detection (stated condition or event)".

It should be noted that step codes such as S10 and S20 herein are used for the purpose of expressing the corresponding content more clearly and concisely, and do not constitute a substantial restriction on the order. In a specific embodiment, those skilled in the art may execute S20 first and then execute S10, etc., but these should all fall within the scope of the present disclosure.

It should be understood that the specific embodiments described herein are only used to explain the present disclosure, and are not intended to limit the present disclosure.

In the following description, the use of suffixes such as "module", "component" or "unit" used to indicate elements is only for the description of the present disclosure, and has no specific meaning in itself. Therefore, "module", "component" or "unit" can be used in a mixed manner.

The terminal device can be a mobile terminal. The mobile terminal can be implemented in various forms. For example, the mobile terminal described herein can include a mobile phone, a tablet computer, a notepad computer, a hand-held computer, a personal digital assistants (PDA), a portable media player (PMP), a navigation device, a wearable device, a smart bracelet, a pedometer and other mobile terminals, as well as a fixed terminal such as a digital TV and a desktop computer.

The present disclosure takes a mobile terminal as an example to illustrate. Those skilled in the art will understand that, in addition to elements specifically used for mobile purposes, the configuration according to the embodiments of the present disclosure can also be applied to the fixed terminal.

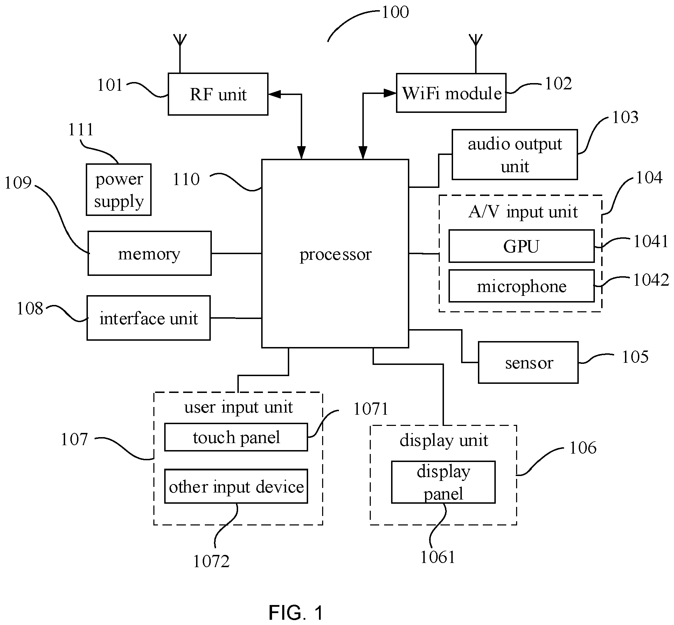

As shown in FIG. 1, FIG. 1 is a schematic structural diagram of a hardware of a mobile terminal according to embodiments of the present disclosure. The mobile terminal 100 includes a Radio Frequency (RF) unit 101, a Wi-Fi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information ortalking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices through wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), or the like.

Wi-Fi is a short-range wireless transmission technology. The mobile terminal can help users transmit and receive email, browse webpage, and access streaming media through the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present disclosure.

When the mobile terminal 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can also provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switching, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated here.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the commands sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

Further, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface through which at least one external device can be connected to the mobile terminal 100. For example, the external device can include a wired or wireless headset port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a high-speed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or executing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 through a power management system, so that functions such as charging, discharging, and power consumption management can be managed through the power management system.

Although not shown in FIG. 1, the mobile terminal 100 can also include a Bluetooth module, or the like, which will not be repeated here.

In order to facilitate the understanding of the embodiments of the present disclosure, the following describes the communication network system on which the mobile terminal of the present disclosure is based.

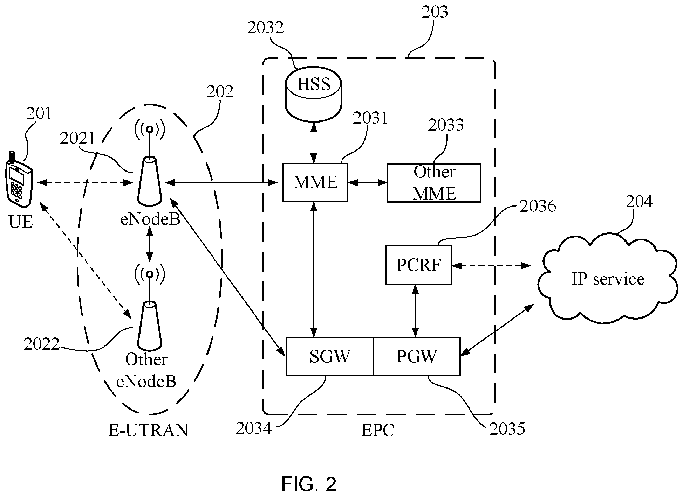

As shown in FIG. 2, FIG. 2 is an architecture diagram of a communication network system according to an embodiment of the present disclosure. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

Specifically, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 through a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service feature, data rates, and so on. All user data can be sent through SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include the Internet, an intranet, IP Multimedia Subsystem (IMS), or other IP services.

Although the LTE system is described above as an example, those skilled in the art should know that, the present disclosure is not only applicable to the LTE system, but also applicable to other wireless communication systems, such as GSM, CDMA2000, WCDMA, TD-SCDMA, and new network systems in the future, or the like, which is not limited here.

Based on the foregoing hardware structure of the mobile terminal and the communication network system, various embodiments of the present disclosure are proposed.

The processing method of the present disclosure can be applied to the processing and transmission process of paging messages and/or paging indications. The application scenario of the processing method of the present disclosure can be a wireless communication system. The wireless communication system can be a communication system based on cellular mobile communication network technology. The wireless communication system can include several terminal devices and several network devices. The network device is generally a base station.

The terminal device can be a device that provides voice and/or data connectivity to a user. The terminal device can communicate with one or more core networks through a radio access network (RAN). The terminal device can also be an loT terminal, such as a sensor device, a mobile terminal, and a computer with loT terminal, for example, can be a stationary, portable, pocket-sized, hand-held, computer built-in or vehicle mounted device, such as station, subscriber unit, subscriber station, mobile station, remote station, access point, remote terminal, access terminal, user terminal, user agent, user device, or user equipment (UE). The terminal device can also be the unmanned aerial vehicle. The terminal device can also be an in-vehicle device, for example, a trip computer with a wireless communication function, or a wireless communication device connected to the trip computer. The terminal device can also be an infrastructure device, for example, a street light, a signal light, or other infrastructure devices with a wireless communication function.

The base station can be a network device in a wireless communication system. The wireless communication system can be a fourth-generation mobile communication network technology (4G) system, also known as a long-term evolution (LTE) system. The wireless communication system can also be a 5G system, also known as a new radio (NR) system or a 5G NR system. The wireless communication system can also be a next-generation system of the 5G system. The access network in the 5G system can be referred to as new generation-radio access network (NG-RAN).

The base station can be an evolved base station (eNB) employed in the 4G system. The base station can also be a base station (gNB) that adopts a centralized distributed architecture in the 5G system. When the base station adopts a centralized distributed architecture, it usually includes a central unit (CU) and at least two distributed units (DU). The central unit is provided with a packet data convergence protocol (PDCP) layer, a radio link control (RLC) layer, and a media access control (MAC) layer. The distribution unit is provided with a physical layer protocol stack, and the embodiment of the present disclosure does not limit the specific implementation manner of the base station.

A wireless connection can be established between the base station and the terminal device through a wireless radio. In various embodiments, the wireless radio is a wireless radio based on the fourth generation mobile communication network technology (4G) standard. Or, the wireless radio is a wireless radio based on the fifth generation mobile communication network technology (5G) standard, for example, the wireless radio is a new radio. The wireless radio can also be a wireless radio based on a next-generation mobile communication network technology standard.

In some embodiments, E2E (End to End) communication can also be established between terminal devices, such as V2V (Vehicle to Vehicle) communication, V2I (Vehicle to Infrastructure) communication, and V2P (Vehicle to Pedestrian) communication in the V2X (Vehicle to everything) communication.

In some embodiments, the above wireless communication system may further include a network management device.

Several base stations are respectively connected to the network management device. The network management device may be a core network device in a wireless communication system, for example, the network management device may be a mobility management entity (MME) in an evolved packet core (EPC) network. The network management device may also be other core network devices, such as a serving gateway (SGW), a public data network gateway (PGW), a policy and charging rule function (PCRF) unit, or a home subscriber server (HSS). The implementation form of the network management device is not limited in the embodiments of the present disclosure.

In some embodiments of the present disclosure, the execution subject includes but is not limited to: UE such as a mobile phone terminal supporting cellular mobile communication, and/or a network device such as a base station.

To assist in understanding the technical solutions of the embodiments of the present disclosure, in some or all of the embodiments, the terminal device may be a UE, and the network device may be a base station.

During the process of receiving and processing the paging message of the UE, the inventor of the present disclosure found the following problems or defects:
(1) The UE under the radio resource control (RRC) idle/inactive state needs to monitor the paging occasion (PO) in each paging cycle to confirm whether it needs to decode the paging Physical Downlink Control Channel (PDCCH)/Physical Downlink Share Channe1 (PDSCH).

When the UE is not paged, such invalid PO monitoring and paging PDCCH and Synchronization Signal Block (SSB) processing will cause great power consumption. In order to deal with this defect, Paging Early Indication (PEI) is introduced to determined whether PO monitoring is required in advance. When there is no paging message, unnecessary SSB synchronization processing and paging PDCCH decoding can be avoided by means of PEI, to reduce power consumption.

In order to further reduce power consumption, the present disclosure proposes a technical solution in which at least one PO needs to be monitored through a PEI, for example, whether at least one PO needs to be monitored through a Downlink Control Information (DCI)-based PEI.

(2) In order to enable the UE in the RRC_IDLE/RRC_INACTIVE state to better implement PO demodulation, the UE in the RRC_IDLE/RRC_INACTIVE state is supported to configure Tracking Reference Signal (TRS)/Channel State Information-Reference Signal (CSI-RS). However, there is no consensus on whether the acquired indication of TRS/CSI-RS is carried by PEI, paging DCI or System Information Block 1 (SIB1). If the TRS/CSI-RS available indication is performed through the PEI, one PEI carries the available indication of the TRS/CSI-RS corresponding to at least one PO, and there is no established solution for how to perform the indication.

The technical solutions according to the embodiments of the present disclosure are mainly used to solve the following technical problems:
(1) If the PO is indicated by PEI whether to monitor or not, how does one PEI indicate the monitoring state of at least one PO in the DRX cycle, and how the design of PEI can be used to minimize the number of times the UE is woken up, thereby reducing energy consumption; and/or
(2) If the available state ofTRS/CSI-RS is indicated by PEI, how does one PEI carry at least one TRS/CSI-RS available indication. In this way, the UE can confirm in advance whether auxiliary time-frequency synchronization can be performed through TRS, thereby reducing the number of SSBs used by the UE for time-frequency synchronization, and reducing system energy consumption.

The above problem (1) and/or problem (2) can be solved through the technical solutions of the embodiments of the present disclosure.

In order to assist the understanding of the various embodiments of the processing method of the present disclosure, the relevant background of the embodiments of the present disclosure is briefly introduced:
Regarding NR paging technology, according to protocol TS 38.300 RRC_INACTIVE
The purpose of paging is to send paging information to the terminal, notify the change of system messages and notify emergency messages. The terminal device only monitors the core network (CN)-initiated paging information in the RRC_IDLE state (discontinuous reception state). The terminal device monitors the CN-initiated paging information and the radio access network (RAN)-initiated paging information in the RRC_IDLE state or the RRC_INACTIVE state (sleep state). In the RRC_IDLE state or the RRC_INACTIVE state, the terminal device does not need to monitor the paging channel at all times, but monitors one PO with the shortest DRX cycle configured by the network, and a paging cycle can also be called paging DRX. The DRX configured by the network includes the following three types:
   1. The paging initiated by the core network.
   2. Default Cycle: configured by system messages.
   3. UE specific cycle: configured by Non-Access Stratum (NAS) signaling.

For paging initiated by the wireless network, UE-specific cycle: configured by radio resource control (RRC) signaling, the terminal device selects the shortest cycle in the configuration cycle as the monitoring cycle according to the current RRC state. That is, the terminal device needs to select the shortest cycle from "Default Cycle" or "UE Specific Cycle" in the RRC_IDLE state, and when the terminal device is in the RRC_INACTIVE state, it needs to select one of the shortest cycles from the above three cycles.

Regardless of whether the paging is initiated by the core network or the wireless network, the terminal device confirms the paging occasion according to the same "UE_ID" (identity document (ID) of the paging message).

The calculation method of paging occasion: i_s = floor (UE_ID/N) mod Ns.

The paging frame is determined by: (SFN + PF_offset) mod T = (T div N)*(UE_ID mod N).

The terminal device monitors and detects whether there is a PDCCH scrambled by P-RNTI at the paging occasion to confirm whether it carries the paging message. If the terminal device carries the paging message, then the paging message sent on the PDSCH is further parsed (decoded).

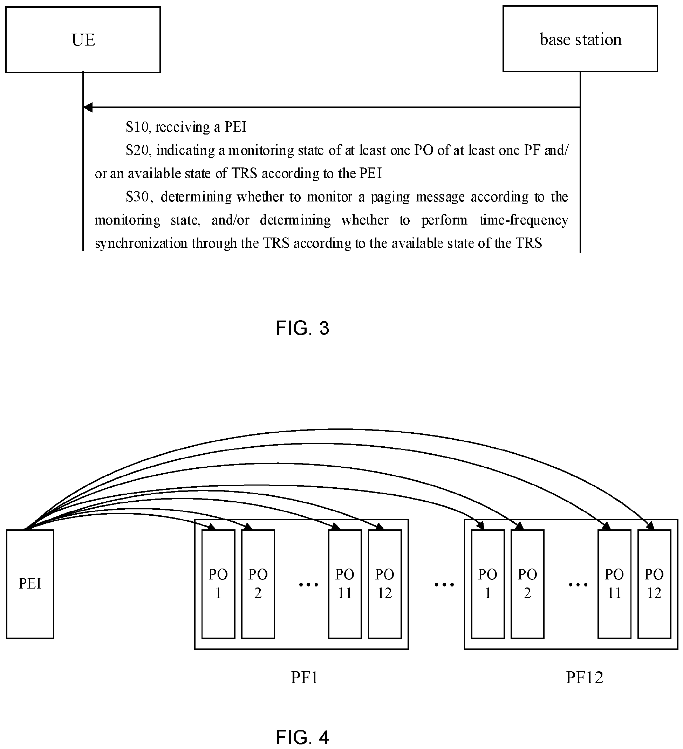

In order to reduce the power consumption of the UE in the process of receiving the paging message, the present disclosure provides a processing method, applied to a terminal device (i.e., UE). In an embodiment, as shown in FIG. 3, the processing method includes the following operations:
S10, receiving a PEI;
S20, indicating a monitoring state of at least one PO of at least one PF and/or an available state of TRS according to the PEl; and
S30, determining whether to monitor a paging message according to the monitoring state, and/or determining whether to perform time-frequency synchronization through the TRS according to the available state of the TRS.

During the process of receiving the paging message by the terminal device, the terminal device obtains the PEI of the corresponding PO in each PF at a fixed position before each PO in the first PF of each group, and the PEI includes at least one indication information.

In an embodiment, the indication information may indicate the monitoring state of the PO in at least one PF at the current moment and after the current moment. That is, the indication information can indicate in advance whether the PO in at least one PF needs to be monitored. After receiving the PEI, the terminal device can know the monitoring state of the PO in the subsequent at least one PF in advance according to the indication information. The terminal device can continue to sleep at the subsequent paging occasions when the monitoring is not required, and only wake up at the subsequent paging occasions when monitoring is required. Therefore, the terminal device can be woken up in a targeted manner according to the indication information in the PEI and the monitoring state of the PO, so as to prevent the terminal device from being frequently woken up to perform search space detection at each paging occasion, thereby saving the power consumption of the terminal device.

In another embodiment, the indication information may indicate the available state of the TRS corresponding to the PO in the at least one PF at the current moment and after the current moment, that is, the indication information can pre-indicate whether the TRS of the PO in the at least one PF is available. After receiving the PEI, the terminal device knows in advance the available state of the TRS corresponding to the PO in the subsequent at least one PF according to the indication information. When the subsequent TRS is available and PO monitoring needs to be performed, auxiliary time-frequency synchronization can be performed through the TRS to quickly realize downlink synchronization and complete PO demodulation. In this way, it is possible to reduce the number of SSBs used by the terminal device for downlink synchronization, shorten the synchronization duration of the terminal device, and reduce the power consumption of the terminal device.

If the terminal device has TRS for auxiliary time-frequency synchronization, only one SSB need to be parsed. However, if there is no TRS for auxiliary time-frequency synchronization, three SSBs may need to be parsed, reducing the number of SSBs for downlink synchronization, which can shorten the downlink synchronization duration, thereby reducing the duration for waking up the terminal device.

In another embodiment, the indication information may indicate the monitoring state of the PO in at least one PF and the available state of the corresponding TRS at the current moment and after the current moment. That is, the indication information may indicate in advance whether the PO in at least one PF needs to be monitored and whether the corresponding TRS is available. After receiving the PEI, the terminal device can know in advance the monitoring state of the PO in at least one subsequent PF according to the indication information. The terminal device can continue to sleep at the subsequent paging occasions that do not need to monitor, and only wake up at the subsequent paging occasions that need to monitor. Therefore, the terminal device is prevented from being frequently woken up at each paging occasion to perform search space detection, which increases the sleep duration of the paging occasion, and reduces the power consumption of the terminal device. The indication information may further indicate in advance whether the TRS corresponding to the PO in the at least one PF is available, and may particularly indicate in advance whether the corresponding TRS of the PO that needs to be monitored by the at least one PF is available. When monitoring is required and the TRS is available for paging occasions, the terminal device can choose to perform auxiliary time-frequency synchronization through the TRS, thereby shortening the time for the terminal device to perform PO demodulation, and saving power consumption of the terminal device.

In this embodiment, the processing method includes receiving a PEI; indicating a monitoring state of at least one PO of at least one PF and/or an available state of TRS according to the PEl; and determining whether to monitor a paging message according to the monitoring state, and/or determining whether to perform time-frequency synchronization through the TRS according to the available state of the TRS. During the process of receiving the paging message by the terminal device, the number of times the terminal device is woken up is reduced and/or the time for waking up the terminal device is shortened, thereby reducing the power consumption of the terminal device is reduced.

In order to assist the understanding of the technical contents related to the available state of TRS, a brief description of the related research on TRS is given below.

During the research process of paging processing, TRS/CSI-RS can be used for UE to obtain channel state, beam management, mobility management and rate matching, or the like.

There is a slight deviation between the frequencies of the base station and the UE physical crystal oscillator, which cannot be completely consistent. Thus, the radio-frequency (RF) carrier signal received by the UE will have a phase deviation, which is represented as a phase rotation on the demodulated symbol constellation of the received subcarrier. That is, the received modulation symbols deviate from a certain phase angle, which is caused by the accumulation of frequency offsets in time. The TRS is required to track the rotational phase of other data signals. TRS is a multi-cycle TRS/CSI-RS, to be precise, one 4-1 port, three TRS/CSI-RS density, NZP-TRS/CSI-RS located in two consecutive time slots. The minimum interval between two TRSs in one time slot is 4 OFDM symbols, and the interval between them is 4 subcarriers. Errors in frequency and time can be estimated according to TRS. The received data compensates for these errors, and the original transmitted modulation coordinates can be rotated back.

The shared TRS/CSI-RS may be the TRS/CSI-RS shared by the UE in the idle state and/or the UE in the inactive state and the UE in the connected state. The UE in the idle state and/or the UE in the inactive state, and the UE in the connected state may monitor the TRS/CSI-RS at the shared TRS/CSI-RS timing. The shared TRS/CSI-RS can also be used for downlink synchronization between the UE and the base station. After the downlink synchronization is completed, the UE can receive the downlink signal of the base station.

The UE whose terminal device is in the RRC_IDLE state or the RRC_INACTIVE state supports the TRS/CSI-RS function to better realize the synchronization function and thus better realize the PO demodulation.

The present disclosure supports the available indication of TRS/CSI-RS through PEI (that is, TRS-related indication information in PEI), and support the available indication of TRS/CSI-RS corresponding to at least one PO. The specific implementation ideas are as follows:
If the available indications of the TRS/CSI-RS corresponding to each PO are different, one PEI indicates the available state of the TRS/CSI-RS at the corresponding position of at least one PF, which saves signal resources than placing a PEI in front of each PO of each PF to indicate the available state of TRS/CSI-RS. TRS/CSI-RS can also assist downlink synchronization and shorten the PO demodulation duration. The manner in which the PEI discontinuously indicates the available state of the TRS is basically the same as the manner in which the PEI discontinuously indicates the monitoring state of the PO.

On the basis of the above embodiments, the inventor found that the indication information of one PEI can continuously indicate at least one PO in the PF, but this way of continuously indicating at least one PO especially takes up the available resources of the PEI, for example, the PEI is DCI-based PEI (paging indication is carried by means of DCI bit mapping), the way that the PEI continuously indicates at least one PO especially wastes the resources occupied by the DCI bit. For example, as shown in FIG. 4, if a PF has 12 POs, and 12 PFs are continuously indicated, 144 bits are required, resulting in a waste of bits. For example, if the PEI is SSS-based PEI (PEI is carried by means of Secondary Synchronization Signal (SSS) reference signal mapping) or TRS-based PEI, 144 sequences are required based on the SSS sequence or the TRS sequence to continuously indicate PO, which results in a waste of sequences.

Based on the above problems, the present disclosure further provides another embodiment. The indication information of one PEI discontinuously indicates the monitoring state of at least one PO and/or the available state of TRS at each PF preset mapping position in the at least one PF. The preset mapping position can be the same position in each PF (that is, the PO has the same sorting position in the PF). That is, the indication information may indicate the monitoring state of the PO at the same position in at least one PF, and in an optional implementation manner, it may be at least one of the following:
The indication information of the first PEI in the first PF discontinuously indicates: the first PO of the first PF, the first PO of the second PF, and the first PO of the third PF.

The indication information of the second PEI in the first PF discontinuously indicates: the second PO of the first PF, the second PO of the second PF, and the second PO of the third PF.

The indication information of the third PEI in the first PF discontinuously indicates: the third PO of the first PF, the third PO of the second PF, and the third PO of the third PF.

The above is just a detailed explanation of the same position, which may include but is not limited to three PFs, and also includes but is not limited to three POs per PF.

The preset mapping position may also be a non-identical position in each PF, as long as the PEI completes the discontinuous indication of all POs in at least one PF. For example, the indication information of the PEI discontinuously indicates the POs at the positions whose sorting positions are incremented one by one in at least one PF until all the POs in the PF are indicated. That is, the indication information may indicate the monitoring state of PO at different positions of at least one PF, and in an optional implementation manner, it may be at least one of the following:
The indication information of the first PEI in the first PF discontinuously indicates: the first PO of the first PF, the second PO of the second PF, and the third PO of the third PF.

The indication information of the second PEI in the first PF discontinuously indicates: the second PO of the first PF, the third PO of the second PF, and the first PO of the third PF.

The indication information of the third PEI in the first PF discontinuously indicates: the third PO of the first PF, the first PO of the second PF, and the second PO of the third PF.

The above is just a detailed explanation of the non-identical positions, which may include but are not limited to three PFs, and also include but are not limited to three POs per PF.

In this embodiment, the indication information of one PEI discontinuously indicates at least one PO at each PF preset mapping position in the at least one PF, which saves the available signal resources of the PEI. For example, the DCI-based PEI is taken as an example. There are 2 PFs, each PF has 4 POs, and 2 PFs are continuously indicated by one PEI, which requires 8 DCI bits. However, one PEI discontinuously indicates the first PO of 2 PFs, then 2 PFs only need 2 DCI bits. Similarly, the PEI uses SSS-based PEI or TRS-based PEI to discontinuously indicate the PO of multiple PFs, which can also save sequence resources. That is, the indication information of one PEI discontinuously indicates the PO at each PF preset mapping position in at least one PF, which can save the DCI bit or the reference signal sequence, that is, the PEI discontinuously indicates the PO, which can save the signal resources for the indication.

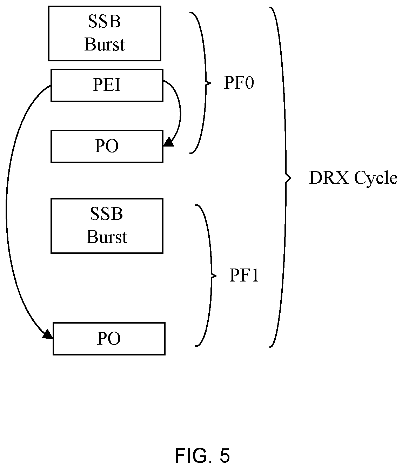

To help understand the technical solution, a specific PEI scenario is used as an example to illustrate:
In a scenario where a PF has only one PEI:
As shown in FIG. 5, SearcheSpaceld=0, Ns=1, N=T/16, T=32, then N=32/16=2. That is, when there are 32 radio frames in one DRX cycle, there are 2 PFs in one DRX cycle, and each PF has one PO. The PEI before the first PO of PF0 discontinuously indicates the monitoring state of a single PO of PF0 and PF1.

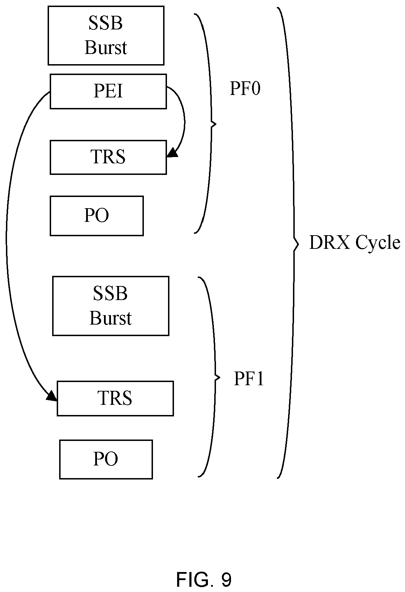

As shown in FIG. 9, SearcheSpaceld=0, Ns=1, N=T/16, T=32, then N=32/16=2. That is, when there are 32 radio frames in one DRX cycle, there are 2 PFs in one DRX cycle, and each PF has one PO. The PEI before the first PO of PF0 discontinuously indicates whether the TRS corresponding to a single PO of PF0 and PF1 is available.

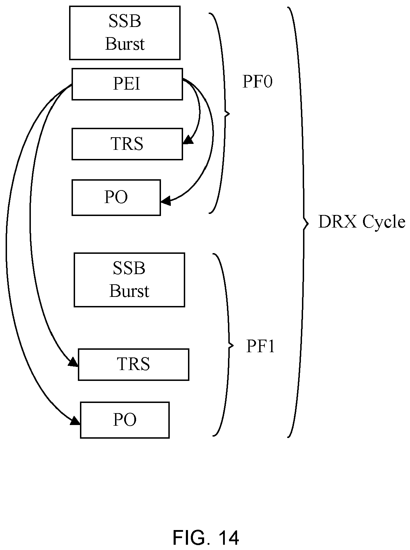

The PEI discontinuously indicates the monitoring state of at least one PO and the available state of TRS at each PF preset mapping position in the at least one PF, that is, as shown in FIG. 5 and FIG. 9, the PEI indicates both the monitoring state of the PO and the available state of the TRS. For example, as shown in FIG. 14, SearcheSpaceld=0, Ns=1, N=T/16, T=32, then N=32/16=2. That is, when there are 32 radio frames in one DRX cycle, there are 2 PFs in one DRX cycle, and each PF has Ns=1 PO. The PEI before the first PO of PF0 discontinuously indicates the monitoring state of the single PO of PF0 and PF1, and also discontinuously indicates whether the TRS corresponding to the single PO of PF0 and PF1 is available.

The monitoring state may include at least one of the following: monitoring, no monitoring, or partial monitoring and partial non-monitoring, and/or, the available state may include at least one of the following: available, unavailable, or partially available and partially unavailable.

In a scenario where a PF include multiple PEls.

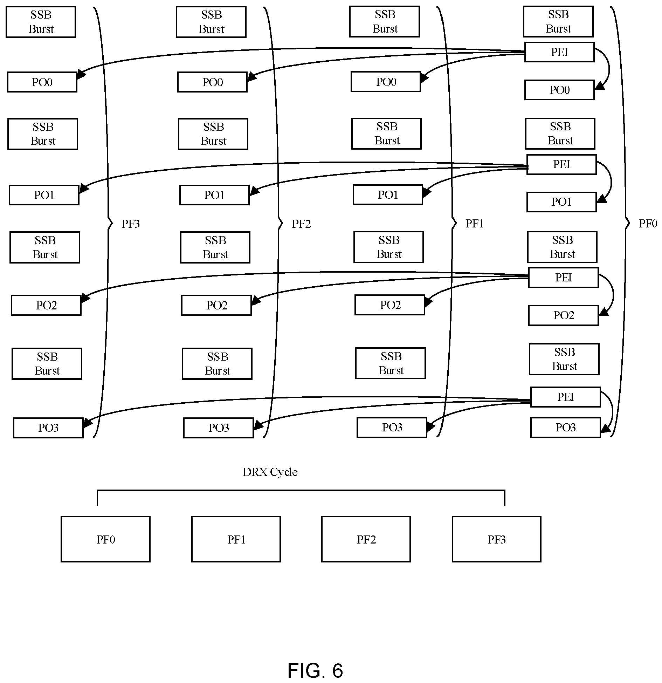

As shown in FIG. 6, SearcheSpaceld=1, Ns=4, N=T/8; T=32; then N=32/8=4. That is, when there are 32 radio frames in one DRX cycle, there are N=4 PFs in one DRX cycle, and each PF has four POs. The indication information of PEI before PO0 of PF0 discontinuously indicates PO0 of PF0 to PF3. The indication information of PEI before PO1 of PF0 discontinuously indicates PO1 of PF0 to PF3. The indication information of PEI before PO2 of PF0 discontinuously indicates the PO2 of PF0 to PF3. The indication information of PEI before PO3 of PF0 discontinuously indicates PO3 of PF0 to PF3. PF0 to PF3 are in the same DRX cycle, and PF0 to PF3 are also in the same group. Optionally, regarding the fact that the PFs of multiple DRX cycles belong to one or more groups, the logic of the indication information of the PEI is basically the same, which is not repeated here.

The inventors found that if one PEI continuously indicates multiple POs, the PEI may only indicate partial PF in one DRX cycle, in a scenario where the paging rate is very low, the terminal device only knows the monitoring state of at least one PO of some PFs in one DRX cycle and/or whether time-frequency synchronization is performed through TRS. Unnecessary wake-up times and/or unnecessary wake-up time can only be avoided for at least one PO of a small part of PF in one DRX cycle, and the purpose of better power consumption reduction cannot be achieved. In an embodiment, in order to solve this deficiency, before the operation S10, the processing method further includes:
S00, determining a paging frame of at least one group within at least one discontinuous reception (DRX) cycle.

Before receiving the PEI, the terminal device may first determine the grouping state of the PF, and one PEI may indicate the monitoring state of at least one PO and/or the available state of the TRS of multiple PFs in a group. For example, one PEI indicates the PO at the preset mapping positions of multiple PFs in a group, which can be PFs in one DRX cycle to form a group, or, PFs in one DRX cycle to form multiple groups, or PFs in multiple DRX cycles to form one group.

Since the indication information of one PEI discontinuously indicates the discontinuous PO of multiple PFs in one group, each PEI is only used to indicate the monitoring state of one PO and/or the available state of TRS of each PF in one group, so each PEI can indicate the PF of the whole or most of the DRX cycle. When the terminal device is in a low paging rate scenario, only Ns POs in the first PF in one group need to be parsed (each PF corresponds to Ns POs), it is possible to know the monitoring state of Ns POs in the PF and/or the available state of TRS in one DRX cycle or multiple DRX cycles. In this way, the terminal device can be prevented from being woken up at paging occasions that do not need to be monitored, and the terminal device can be in a dormant state for a long time, thereby reducing power consumption. The terminal device obtains the available state of the TRS corresponding to the PO according to the PEI, and uses the TRS to perform auxiliary time-frequency synchronization, thereby shortening the wake-up time, thereby saving power consumption.

In orderto assist the understanding of the technical solution, a specific PEI scenario is used as an example to illustrate.

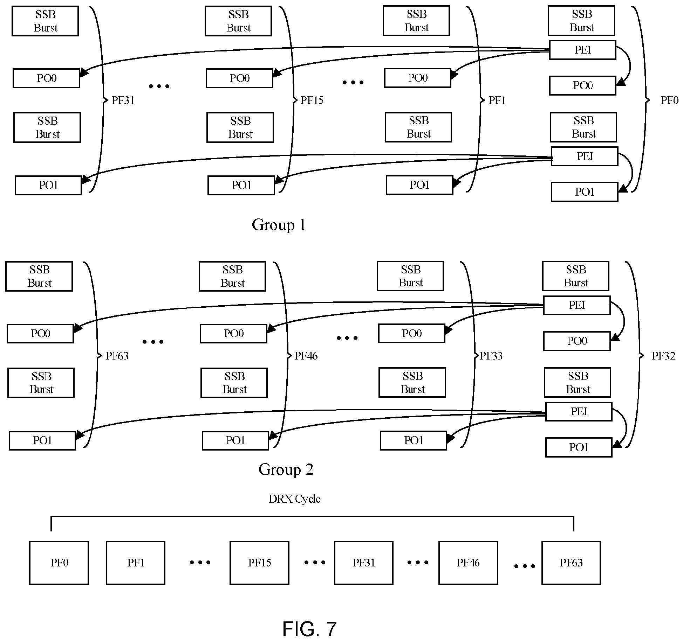

When one PF includes multiple PEls, and one DRX cycle includes multiple groups, as shown in FIG. 7, SearcheSpaceld=0, Ns=2, N=T/4, T=256, N=256/4=64, that is, when there are 256 radio frames in one DRX Cycle, there are 64 PFs in one DRX cycle, and each PF has 2 POs, then the PO in the entire DRX cycle is divided into two groups (i.e., group 1 and group 2) for PEI indication.

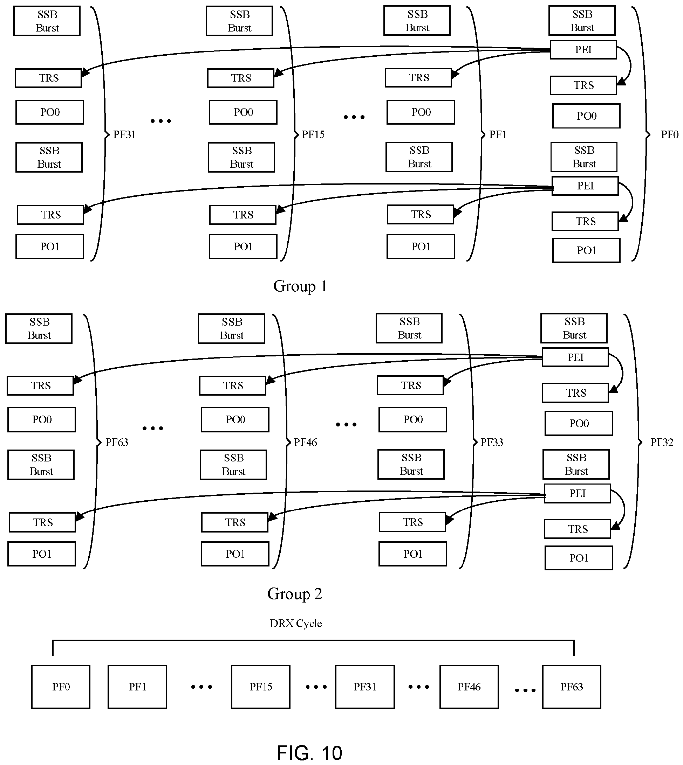

It should be noted that, as shown in FIG. 7, the indication information of the PEI may indicate the TRS of each PF in group 1 and group 2. As shown in FIG. 10, SearcheSpaceld=0, Ns=2, N=T/4, T=256, N=256/4=64, that is, when there are 256 radio frames in one DRX Cycle, there are 64 PFs in one DRX cycle, and each PF has 2 POs, then the PO in the entire DRX cycle is divided into two groups (i.e., group 1 and group 2) for PEI indication.

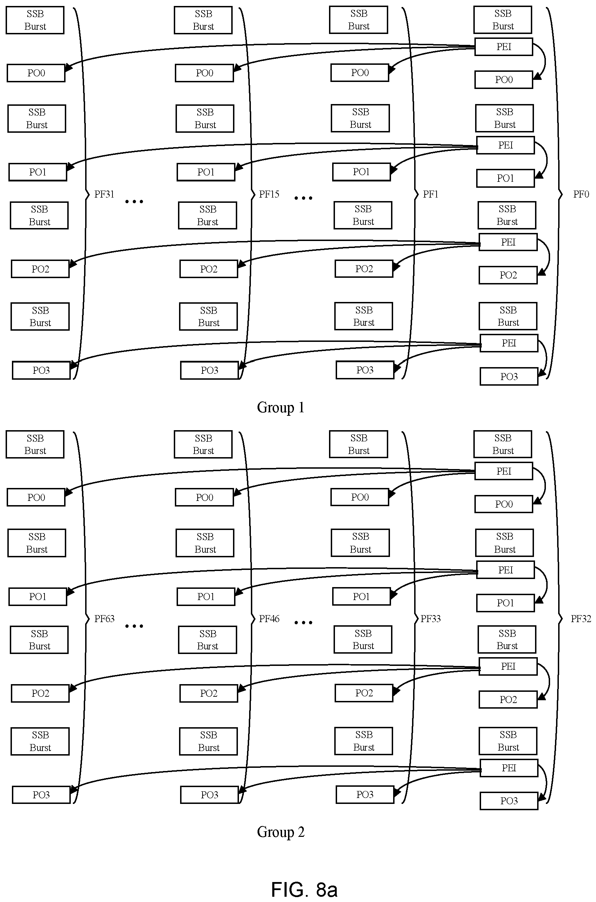

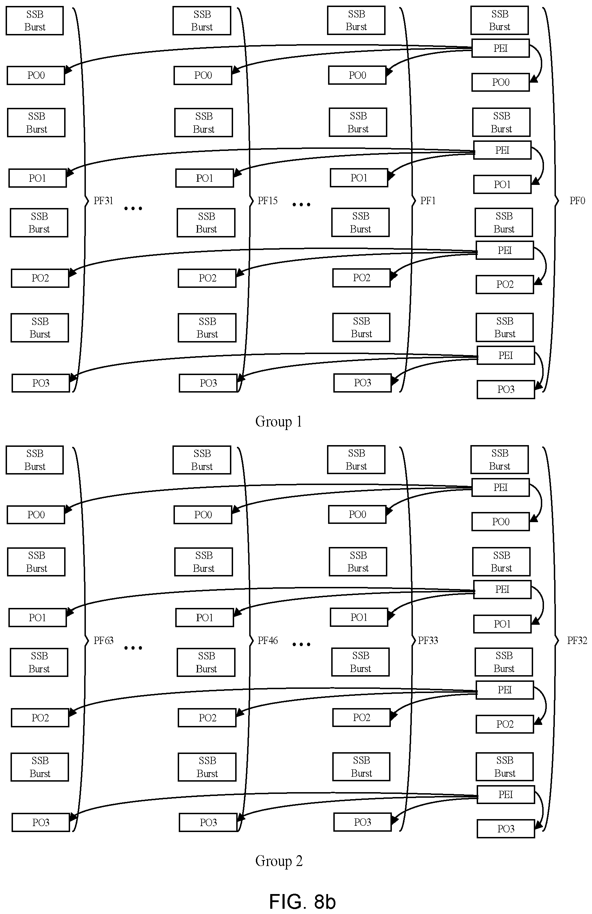

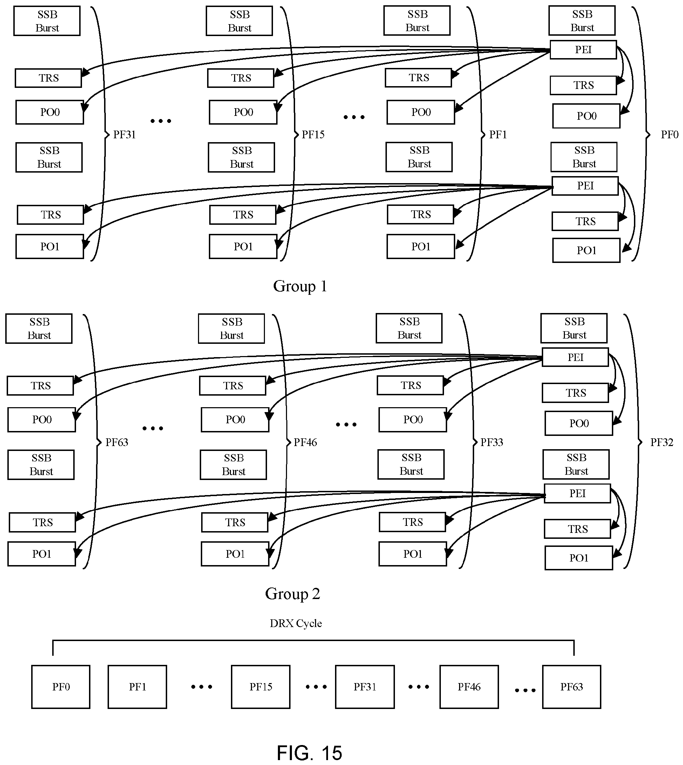

As for an embodiment shown in FIG. 10, if the PEI is DCI-based PEI, and the number of bits used for PEI indication is 48, it is given according to the scenario that one PEI can indicate L=32 PFs. The design diagram of the embodiment is only used to represent the scheduling process, and does not indicate that the scheduled PFs are parallel scheduling, that is, PF0, PF1, ... , PF63 are arranged in chronological order. The grouping method and the indication method of PEI discontinuity indicating TRS in FIG. 10 are also applicable to FIG. 7, FIG. 8a and FIG. 8b. In FIG. 7, FIG. 8a, and FIG. 8b, the PEI can simultaneously indicate the available state of the TRS corresponding to the PO. In order to more intuitively reflect the application of the grouping method and the indication method in FIG. 10, the PEI discontinuous indication can be added in FIG. 10 to indicate the monitoring state of at least one PO of each group of PFs. Referring to FIG. 15, the PEI discontinuously indicates the monitoring state of the PO and the available state of the TRS at the position corresponding to each PF in each group.

As shown in FIG. 8a and FIG. 8b, SearcheSpaceld=1, Ns=4, N=T/2, T=256, then N=256/2=128. That is, when there are 256 radio frames in one DRX Cycle, there are 128 PFs in one DRX cycle, each PF has 4 POs, then the PO in the entire DRX cycle is divided into four groups (i.e., group 1, group 2, group 3 and group 4) for PEI indication.

In an embodiment, the PEI is located before the corresponding PO in the first PF in the same group, and at least one PF indicated by the indication information exists in the at least one group. When the terminal device is in the RRC idle or RRC INACTIVE state, during the process of monitoring the paging message by the terminal device,
(1) If there is only one group in one DRX cycle, one PEI is placed before each of the Ns POs of the first PF in one DRX cycle. The indication information of the PEI respectively indicates whether the PO at the corresponding position of each PF in the entire DRX cycle needs to be monitored and/or whether to perform auxiliary time-frequency synchronization through the TRS. If the PO does not need to be monitored, the terminal device directly skips the POs that do not need to be monitored, stays dormant, and is only woken up at the paging occasions that need to be monitored for PDCCH monitoring, and/or when the PO needs to be monitored and the TRS indicated by the PEI is available, auxiliary time-frequency synchronization is performed through the TRS.
(2) If multiple DRX cycles belong to the same group, one PEI is placed before the Ns PO monitoring of the first PF in the first DRX cycle in terms of timing. The indication information of the PEI respectively indicates whether the PO at the corresponding position of each PF in multiple DRX cycles needs to be monitored and/or whether to perform auxiliary time-frequency synchronization through TRS. If the PO does not need to be monitored, the terminal device directly skips the POs that do not need to be monitored, stays dormant, and is only woken up at the paging occasions that need to be monitored for PDCCH monitoring, and/or when the PO needs to be monitored and the TRS indicated by the PEI is available, auxiliary time-frequency synchronization is performed through the TRS.

If one DRX cycle contains multiple groups, one PEI is placed before the Ns PO monitoring of the first PF of each group. The indication information of the PEI indicates whether the PO at the corresponding position of each PF of each group needs to be monitored and/or whether to perform auxiliary time-frequency synchronization through TRS. If the PO does not need to be monitored, the terminal device directly skips the POs that do not need to be monitored, stays dormant, and is only woken up at the POs that need to be monitored for PDCCH monitoring, and/or when the PO needs to be monitored and the TRS indicated by the PEI is available, auxiliary time-frequency synchronization is performed through the TRS.

In another embodiment, the operation S00 includes determining the PF of at least one group within at least one DRX cycle based on a first number and/or a second number.

The first number is the number of PFs included in the DRX cycle, and the second number is the number of identifiers bearing the indication information of the PEI. It is determined which paging frames of the DRX cycle are the PF of at least one group within at least one DRX cycle according to the first number and/or the second number. For example, according to the first number and the second number, the number L of PFs in one group is determined.

For ease of understanding, assume that the first number is N, the second number is G, and the total number of radio frames in one DRX cycle is T. Based on the protocol relationship in Table 2, it can be known that the number of PFs in one group are L, and *L* = 2^{x} <= *G*. For scenarios where there are more than L PFs in one DRX cycle (i.e., N>L), a classification indication can be made for each L PFs to form a group. The benefit of indicating only L PFs for the entire DRX cycle is the saving of DCI bits or reference signal sequences. In this way, only L DCI bits or reference signal sequences are required at most to indicate the entire DRX cycle. The value of L depends on the number of DCI bits or the number of reference signal sequences (that is, the second number G) ultimately used to carry PEI. For example, based on *L* = 2^{x} <= *G*, DCI-based PEI has 48 bits (i.e., G=48), then L is 32; DCI-based PEI has 12 bits (i.e., G=12), then L is 8.

For the embodiment in FIG. 7, it is assumed that DCI-based PEI has 48 bits, and one PEI indicates 32 PFs. The design diagram of the embodiment is only used to represent the scheduling process, and does not indicate that the scheduled PFs are parallel scheduling, that is, PF0, PF1, ... , PF63 are arranged in chronological order.

According to the 38.304 and 38.331 protocols, the meanings of the Paging related parameters are summarized, as shown in Table 1. According to the possible values of high-level signaling, the number of PFs that may exist in one DRX cycle is summarized in Table 2.

It can be seen from Table 2 that there may be too much PF in one DRX cycle, in order to save the DCI bit or reference signal sequence, the classification is done according to the number of different PFs in the DRX cycle. The purpose is to use as many bits or reference signal sequences as possible to indicate the PF in the DRX cycle, so as to ensure that the terminal device can be in a dormant state for a longer time under low paging rate to reduce power consumption.

**Table 1**

| Parameter | Note |
|---|---|
| T | RRC_IDLE: min{UE-specific cycle configured by NAS, defaultPagingCycle in SIB1} |
| | RRC_INACTIVE: min{UE-specific cycle configured by NAS, defaultPagingCycle in SIB1, ran-PagingCycle carried in RRCRelease message} |
| PF_offset | This offset is used to determine PF. Its value is specified by PCCH-Config ->nAndPagingFrameOffset of SIB1. |
| N | N is used to determine how many PFs are included in each DRX cycle. Its value is specified by PCCH-Config->nAndPagingFrameOffset of SIB1, see the introduction of this field for details |
| Ns | Ns indicates how many POs correspond to each PF. Its value is specified by PCCH-Config->ns of SIB1 |
| UE_ID | UE_ID=5G-S-TMSI mod 1024 |

**Table 2**

| | | | | |
|---|---|---|---|---|
| N | 32 | 64 | 128 | 256 |
| T | | | | |
| T | 32 | 64 | 128 | 256 |
| T/2 | 16 | 32 | 64 | 128 |
| T/4 | 8 | 16 | 32 | 64 |
| T/8 | 4 | 8 | 16 | 32 |
| T/16 | 2 | 4 | 8 | 16 |

In an embodiment, the operation S30 includes at least one of the following:
indicating that at least one TRS of different PFs in at least one group is available;
monitoring at least one PO of different PFs in at least one group;
monitoring at least one PO of different PFs in at least one group and indicating that at least one TRS of different PFs in at least one group is available;
indicating that at least one TRS of different PFs in at least one group is not available;
not monitoring at least one PO of different PFs in at least one group;
not monitoring at least one PO of different PFs in at least one group and indicating that at least one TRS of different PFs in at least one group is not available;
monitoring at least one PO of different PFs in at least one group and not monitoring at least one PO of different PFs in at least one group;
indicating that at least one TRS of different PFs in at least one group is available and indicating that at least one TRS of different PFs in at least one group is not available;
monitoring at least one PO of different PFs in at least one group and indicating that at least one TRS of different PFs in at least one group is available, and not monitoring at least one PO of different PFs in at least one group and indicating that at least one TRS of different PFs in at least one group is available;
monitoring at least one PO of different PFs in at least one group and indicating that at least one TRS of different PFs in at least one group is available, and not monitoring at least one PO of different PFs in at least one group and indicating that at least one TRS of different PFs in at least one group is not available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is not available; and
not monitoring at least one PO of different PFs in at least one group and indicating that at least one TRS of different PFs in at least one group is available, and not monitoring at least one PO of different PFs in at least one group and indicating that at least one TRS of different PFs in at least one group is not available.

For the operation S30, the further detailed description is as follows:
In an embodiment, the indication information of the PEI may indicate that the terminal device performs auxiliary time-frequency synchronization based on at least one TRS of different PFs in at least one group. That is, the available state of at least one TRS of different PFs in at least one group is available. The terminal device can perform auxiliary time-frequency synchronization based on at least one TRS of different PFs in at least one group according to the available state, so as to reduce the time-consuming time-frequency synchronization and reduce the power consumption of the terminal device.

In an embodiment, the indication information of the PEI may indicate that the terminal device monitors at least one PO of different PFs in at least one group. That is, at least one PO of different PFs in at least one group needs to be monitored. The terminal device can monitor at least one PO of different PFs in at least one group according to the monitoring state, and not monitor the PO whose monitoring state is no need to be monitored, thereby reducing the number of times the terminal device wakes up and reducing the power consumption of the terminal device.

In an embodiment, the indication information of the PEI may indicate that the terminal device monitors at least one PO of different PFs in at least one group and performs auxiliary time-frequency synchronization based on at least one TRS of different PFs in at least one group. That is, at least one PO of different PFs in at least one group needs to be monitored, and the available state of at least one TRS of different PFs in at least one group is available. The terminal device can monitor at least one PO of different PFs in at least one group according to the monitoring state, so as to reduce the number of times the terminal device wakes up. The terminal device can perform auxiliary time-frequency synchronization based on at least one TRS of different PFs in at least one group according to the available state, so as to reduce the time-consuming time-frequency synchronization and reduce the power consumption of the terminal device.

In an embodiment, the indication information of the PEI may indicate that the terminal device does not perform auxiliary time-frequency synchronization based on at least one TRS of different PFs in at least one group. That is, the available state of at least one TRS of different PFs in at least one group is unavailable, and the terminal device does not perform auxiliary time-frequency synchronization based on at least one TRS of different PFs in at least one group.

In an embodiment, the indication information of the PEI may indicate that the terminal device does not monitor at least one PO of different PFs in at least one group. That is, at least one PO of different PFs in at least one group doesn't need to be monitored, and the terminal device does not monitor at least one PO of different PFs in at least one group.

In an embodiment, the indication information of the PEI may indicate that the terminal device does not monitor at least one PO of different PFs in at least one group and does not perform auxiliary time-frequency synchronization based on at least one TRS of different PFs in at least one group. That is, at least one PO of different PFs in at least one group doesn't need to be monitored, and the available state of at least one TRS of different PFs in at least one group is unavailable. The terminal device does not monitor at least one PO of different PFs in at least one group and does not perform auxiliary time-frequency synchronization based on at least one TRS of different PFs in at least one group.

In an embodiment, the indication information of the PEI may indicate that the terminal device monitors at least one PO of different PFs in at least one group and does not monitor at least one PO of different PFs in at least one group. That is, the monitoring states of multiple POs of different PFs in at least one group are that some POs need to be monitored and some POs do not need to be monitored, and the terminal device monitors at least one PO of different PFs in at least one group and does not monitor at least one PO of different PFs in at least one group.

In an embodiment, the indication information of the PEI may indicate that the terminal device performs auxiliary time-frequency synchronization based on at least one TRS of different PFs in at least one group and does not perform auxiliary time-frequency synchronization based on at least one TRS of different PFs in at least one group. That is, the available states of multiple TRSs of different PFs in at least one group are partially available and partially unavailable. The terminal device performs auxiliary time-frequency synchronization based on at least one TRS of different PFs in at least one group, and simultaneously does not perform auxiliary time-frequency synchronization based on at least one TRS of different PFs in at least one group.

In an embodiment, the indication information of the PEI may indicate that the terminal device monitors at least one PO of different PFs in at least one group and performs auxiliary time-frequency synchronization based on at least one TRS of different PFs in at least one group, and does not monitor at least one PO of different PFs in at least one group and performs auxiliary time-frequency synchronization based on at least one TRS of different PFs in at least one group. That is, the monitoring states of multiple POs of different PFs in at least one group are that some POs need to be monitored and some POs do not need to be monitored, and the available state of at least one TRS of different PFs in at least one group is available. The terminal device monitors at least one PO of different PFs in at least one group and indicates that at least one TRS of different PFs in at least one group is available, and does not monitor at least one PO of different PFs in at least one group and indicates that at least one TRS of different PFs in at least one group is available.

In an embodiment, the indication information of the PEI may indicate that the terminal device monitors at least one PO of different PFs in at least one group and performs auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is partially available and partially unavailable. The terminal device monitors at least one PO of different PFs in at least one group and indicates that at least one TRS of different PFs in at least one group is available, and does not monitor at least one PO of different PFs in at least one group and indicates that at least one TRS of different PFs in at least one group is unavailable.

In an embodiment, the indication information of the PEI may indicate that the terminal device monitors at least one PO of different PFs in at least one group and does not perform auxiliary time-frequency synchronization based on at least one TRS of different PFs in at least one group, and does not monitor at least one PO of different PFs in at least one group and performs auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is partially available and partially unavailable. The terminal device monitors at least one PO of different PFs in at least one group and indicates that at least one TRS of different PFs in at least one group is unavailable, and does not monitor at least one PO of different PFs in at least one group and indicates that at least one TRS of different PFs in at least one group is available.

In an embodiment, the indication information of the PEI may indicate that the terminal device monitors at least one PO of different PFs in at least one group and does not perform auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is unavailable. The terminal device monitors at least one PO of different PFs in at least one group and indicates that at least one TRS of different PFs in at least one group is unavailable, and does not monitor at least one PO of different PFs in at least one group and indicates that at least one TRS of different PFs in at least one group is unavailable.

In an embodiment, the indication information of the PEI may indicate that the terminal device does not monitor at least one PO of different PFs in at least one group and performs auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring state of multiple POs of different PFs in at least one group is that POs do not need to be monitored, the available state of multiple TRSs of different PFs in at least one group is partially available and partially unavailable. The terminal device does not monitor at least one PO of different PFs in at least one group and indicates that at least one TRS of different PFs in at least one group is available, and does not monitor at least one PO of different PFs in at least one group and indicates that at least one TRS of different PFs in at least one group is unavailable.

In this embodiment, the indication information of PEI can discontinuously indicate that at least one PO of different PFs in one or more groups needs to be monitored, does not need to be monitored, or, some of POs need to be monitored and some of POs do not need to be monitored. TRS is available, TRS is unavailable or part of TRS is available and part of TRS is unavailable. The indication information may cover indicating the monitoring state of PO and/or the available state of the TRS in one or more PFs. The PEI may be located before each PO in the first PF in the same group, providing an implementation of PEI discontinuity indicating at least one PO of different PFs, which saves the number of identifiers (such as DCI bits or reference signal sequences) that carry PEI, and ensures that the terminal device can be in a dormant state for a longer time and/or can perform PO demodulation for a shorter time under a low paging rate, so as to reduce power consumption.

In an embodiment, the operation S20 includes:
S21, determining the monitoring state of at least one PO of at least one PF and/or the available state of the TRS within a same DRX cycle or different DRX cycles according to the PEI.

In an embodiment, the operation S21 includes at least one of the following:
when the PF within the DRX cycle is configured as a single group, parsing indication information in the PEI before each PO in a first PF of the single group, and determining the monitoring state of the PO and/or the available state of the TRS at a corresponding position of each PF of the single group, the monitoring state includes that PO needs to be monitored, does not need to be monitored, or, some of POs need to be monitored and some of POs do not need to be monitored. The available state includes that TRS is available, TRS is unavailable or part of TRS is available and part of TRS is unavailable; and
when the PF within the DRX cycle is configured as multiple groups, parsing indication information in the PEI before each PO in a first PF of each group, and respectively determining the monitoring state of the PO and/or the available state of the TRS at a corresponding position of each PF of each group.

In an embodiment, the operation S21 includes at least one of the following:
when the PF within the DRX cycle is configured as a single group, parsing indication information in the PEI before each PO in a first PF of the single group, and determining the monitoring state of the PO and/or the available state of the TRS at corresponding positions of multiple non-consecutive PFs selected by a predetermined rule of the single group; and
when the PF within the DRX cycle is configured as multiple groups, parsing indication information in the PEI before each PO in a first PF of each group, and respectively determining the monitoring state of the PO and/or the available state of the TRS at corresponding positions of multiple non-consecutive PFs selected by a predetermined rule of each group.

The predetermined rule may be to determine a plurality of non-consecutive PFs by selecting the odd and even numbers of the PF sequence numbers in the group, selecting the arithmetic sequence, or the like. Different from each continuous PF in the group, the predetermined rule selects multiple non-consecutive PFs to apply to the situation of a single group and multiple groups.

In a feasible manner of the preset rule, the preset rule is an odd-even selection method. That is, the PF with odd or even sequence number is selected in a group, to parse the PEls before the POs before the first PF in the group, and determine the monitoring state of PO and/or the available state of TRS at positions corresponding to multiple non-consecutive PFs with odd or even sequence numbers.

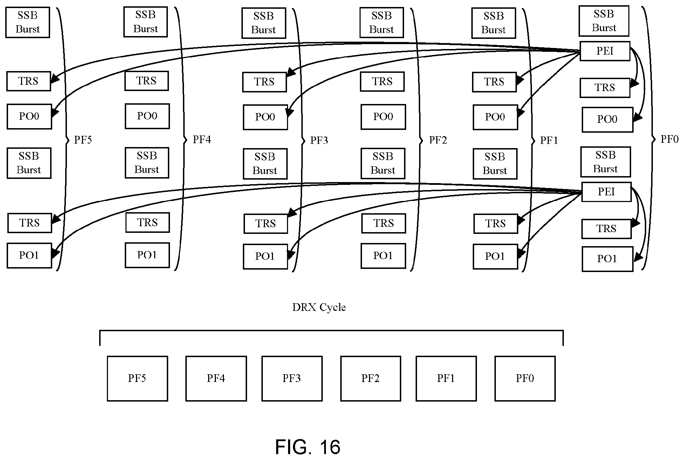

In an embodiment, the preset rule is to select multiple non-consecutive PFs with odd sequence numbers. Referring to FIG. 16, a group includes 6 PFs, and each PF has 2 POs. The PFs in the group are PF0, PF1, PF2, PF3, PF4, and PF5, respectively. The PEI before PO0 and PO1 in the first PF0 of this group discontinuously indicates the monitoring state of PO and the available state of TRS at the corresponding positions in PF1, PF3, and PF5. It should be noted that, in this optional embodiment, a detailed explanation for selecting a plurality of non-consecutive PFs only for the preset rule may include but not limited to 6 PFs, and also include but not limited to 2 POs per PF.

In an embodiment, the preset rule is to select multiple non-consecutive PFs with even sequence numbers. For example, a group includes 12 PFs. The PEI of the first PF in the group discontinuously indicates the monitoring state of the PO and/or the available state of the TRS at the corresponding positions of PF2, PF4, PF6, PF8, PF10, and PF12.

In an embodiment, the preset rule is to select multiple non-consecutive PFs whose sequence numbers are arithmetic progressions. For example, a group includes 12 PFs, the arithmetic sequence is a sequence with the first item 0 and the tolerance is 3, and the arithmetic sequence is 0, 3, 6, 9, 12. Therefore, the PEI of the first PF in the group discontinuously indicates the monitoring state the PO and/or the available state of the TRS at the corresponding positions of PF3, PF6, PF9, and PF12.

In an embodiment, receiving the PEI includes: receiving a PEI corresponding to a PO in at least one group of PFs of at least one DRX cycle.

The specific process of the terminal device receiving PEI is as follows: receiving the PEI of the corresponding PO of PFs in one or more groups in one DRX cycle, and the corresponding PO in the PF can be interpreted as the PO at the preset mapping position in the PF; receiving the PEI of the corresponding PO of PFs in a group in multiple DRX cycles; and receiving PEls of POs of PFs corresponding to multiple groups in multiple DRX cycles. The PEI precedes the corresponding PO in the first PF in the same group.

In an embodiment, the operation S30 includes at least one of the following:
in response to the indication information identification unit in the PEI, monitoring the PO;
in response to the indication information identification unit in the PEI, synchronizing via the TRS;
in response to the indication information identification unit in the PEI, monitoring the PO and synchronizing via the TRS;
in response to the indication information identification unit in the PEI, not monitoring the PO;
in response to the indication information identification unit in the PEI, not synchronizing via the TRS; and
in response to the indication information identification unit in the PEI, not monitoring the PO and not synchronizing via the TRS.

When the PEI is DCI-based, multiple bits in PEI discontinuously indicate the monitoring state of POs at the same position of multiple PFs. That is, if the identification unit (such as a bit) of the indication information is the first value (such as 1), the PO indicated by this identification unit needs to be monitored, and the PDCCH and/or PDSCH of the PO indicated by this identification unit are monitored. If the identification unit (such as a bit) of the indication information is the second value (such as 0), the PO indicated by the identification unit doesn't need to be monitored, and the PDCCH and/or PDSCH of the PO indicated by the identification unit are not monitored.

For example, PEI is 0101, that is, the identification unit of the indication information is 0101, which in turn discontinuously indicates PO1 at the same position in PF0, PF1, PF2 and PF3. Then, the PDCCH and/or PDSCH of PO1 of PF0 are not monitored, the PDCCH and/or PDSCH of PO1 of PF1 are monitored, the PDCCH and/or PDSCH of PO1 of PF2 are not monitored, and the PDCCH and/or PDSCH of PO1 of PF3 are monitored.

When the indication information of PEI is a reference signal sequence, the identification unit (e.g., subsequence) of the reference signal sequence is the first value, the PDCCH and/or PDSCH of the PO indicated by the identification unit is monitored; the identification unit (e.g., subsequence) of the reference signal sequence is the second value, and the PDCCH and/or PDSCH of the PO indicated by the identification unit are not monitored.

Based on the same principle, when TRS available information is carried by the multiple bits of DCI-based PEI, the multiple bits of the indication information indicate the available state of the TRS corresponding to the PO at the same position of the multiple PFs. If the identification unit (such as a bit) of the indication information is the first value (such as 1), the available state of the TRS corresponding to the PO indicated by this identification unit is available, and it is determined that the TRS corresponding to the PO indicated by this identification unit is applied to the auxiliary time-frequency synchronization before the PO demodulation. If the identification unit (such as a bit) of the indication information is the second value (such as 0), the available state of the TRS corresponding to the PO indicated by the identification unit is unavailable, and it is determined that the TRS corresponding to the PO indicated by the identification unit is not used for auxiliary time-frequency synchronization before PO demodulation.

For example, PEI is 0101. That is, the identification unit of the indication information is 0101, which in turn discontinuously indicates the TRS at the same position in PF0, PF1, PF2 and PF3, then the TRS corresponding to PO1 of PF0 is unavailable, the TRS corresponding to PO1 of PF1 is available, the TRS corresponding to PO1 of PF2 is unavailable, and the TRS corresponding to PO1 of PF3 is available.

When the TRS available information is carried by sequence-based PEI, the identification unit (such as a subsequence) of the reference signal sequence is the first value, then the TRS corresponding to the PO indicated by the identification unit can be available and can be applied to time-frequency synchronization before PO demodulation. If the identification unit (such as a subsequence) of the reference signal sequence is the second value, the TRS corresponding to the PO indicated by the identification unit is unavailable.

When the identification unit of PEI is used to indicate both the monitoring state of PO and the available state of TRS, the PEI indication information is explained as follows (taking DCI-based PEI as an example, Sequence-based PEI has the same analysis).

For example, PEI is 01010001. That is, the identification unit of PO monitoring state indication information (that is, PO indication) is 0101, and the identification unit of TRS available state indication information (that is, TRS available indication) is 0001. PEI successively indicates PO1 at the same position in PF0, PF1, PF2 and PF3, PO1 of PF0 is not monitored and the TRS corresponding to PO1 of PF0 is unavailable, PO1 of PF1 is monitored and the TRS corresponding to PO1 of PF1 is unavailable, PO1 of PF2 is not monitored and the TRS corresponding to PO1 of PF2 is unavailable, PO1 of PF3 is monitored and the TRS corresponding to PO1 of PF3 is available and can be applied to auxiliary time-frequency synchronization before PO demodulation.

When the PF included in the DRX cycle contains only one PO, that is, Ns=1, and the number of PFs is relatively small, for example, the number of PFs is 2, 4, 8, etc., Then, it is only necessary to place a PEI carrying a TRS available indication (i.e., TRS available state related indication information) before at least one PO of the first PF to indicate the available state of TRS in the entire DRX cycle.

When the available indication ofTRS corresponding to each PO is random, and each PF in the DRX cycle contains at least one PO, and the number of PFs in the DRX cycle is relatively large. For example, there are 128 PFs in each DRX cycle, etc. The PFs in the entire DRX cycle need to be grouped according to the bits that the PEI can represent, and the PEI is only placed before each PO in the first PF of each group to indicate the available state of TRS in the entire group.

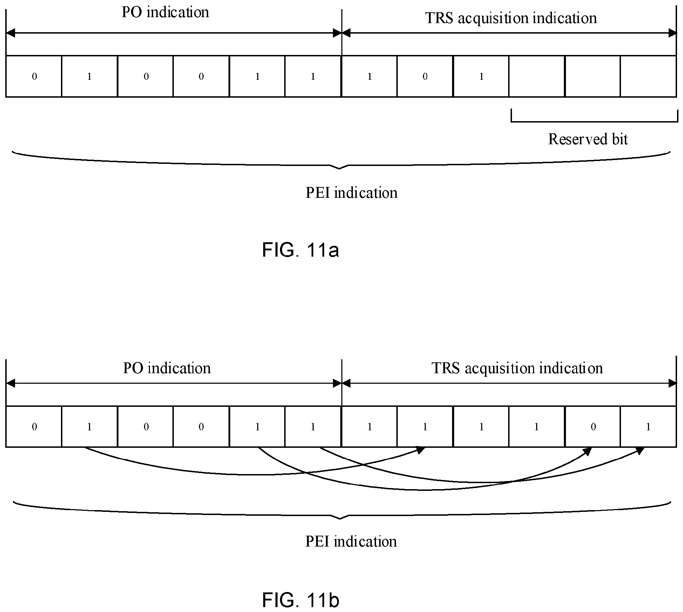

In the present disclosure, the PEI can indicate only the monitoring state of the PO, or only the available state of the TRS corresponding to the PO, or can simultaneously indicate both the monitoring state of the PO and the available state of the TRS corresponding to the PO. As shown in FIG. 11a and FIG. 11b, a technical solution in which the PEI simultaneously indicates the monitoring state of the PO and the available state of the TRS is given, and the example takes DCI-based as an example, and the design of Sequence-based PEI has the same technical solution. The above-mentioned embodiments and the examples of FIG. 5 to FIG. 10 provide a schematic diagram in which the PEI only indicates the monitoring state of the PO or the PEI only indicates the available state of the TRS corresponding to the PO. In fact, the PEI can also simultaneously indicate the monitoring state of the PO and the available state of the TRS, as shown in the examples of FIG. 14 to FIG. 16.

The purpose of the TRS available indication is to make the terminal device know in advance whether the TRS exists, and when PO demodulation needs to be performed, it is used to assist the SSB to achieve better downlink synchronization, thereby ensuring the success rate of PO demodulation. Based on this, this patent also proposes that whether the TRS available indication needs to be indicated can be determined according to whether the PO in the PEI needs to be monitored. That is, if the bit indicating the monitoring state of PO in the PEI is 0, that is, there is no need to monitor the PO, the TRS available indication does not need to occupy the bit, and can be replaced by a preset reserved bit. In this way, the PEI indication bit can be further saved. The design scheme is also applicable to SSS-based orTRS-based PEI.

As shown in FIG. 11a, assuming that PEI indicates the bit indicated by PO: 0 means that there is no need to monitor this PO, 1 means that this PO needs to be monitored. TRS available indication in PEI: 0 bit means that TRS is not available, 1 means that TRS is available, reserved bit means that the current bit does not need to be occupied for the time being. As shown in FIG. 11b, the TRS available indication given in the PEI is valid only when the PO needs to be monitored. The bit design in FIG. 11b is that one PO indication corresponds to one TRS available indication, but only when the bit indicated by PO is 1, the TRS available indication needs to be parsed for availability and unavailability.

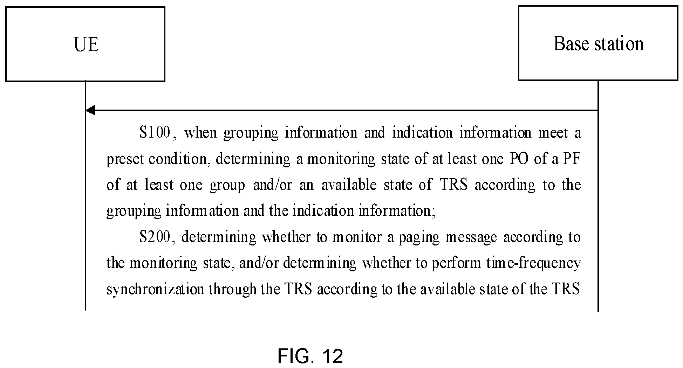

In order to reduce the power consumption of the UE during the paging process, the present disclosure further provides a processing method, applied to a terminal device. In an embodiment, referring to FIG. 12, the processing method includes the following operations:
S100, when grouping information and indication information meet a preset condition, determining a monitoring state of at least one PO of a PF of at least one group and/or an available state of TRS according to the grouping information and the indication information; and
S200, determining whether to monitor a paging message according to the monitoring state, and/or determining whether to perform time-frequency synchronization through the TRS according to the available state of the TRS.

In an embodiment, after receiving the PEI, the terminal device can know the monitoring state of the PO in the current and subsequent at least one PF in advance according to the indication information, and continue to sleep at the subsequent paging occasions that do not need to be monitored, and only wake up at the subsequent paging occasions that need to be monitored. The terminal device is woken up in a targeted manner, avoiding frequent wake-up at each paging occasion and performing search space detection, thereby reducing the power consumption of the terminal device.

In another embodiment, after receiving the PEI, the terminal device can know in advance the available state of the TRS corresponding to the PO in the current and subsequent at least one PF according to the indication information. When the subsequent TRS is available and the corresponding PO needs to be monitored, the TRS assists the SSB to achieve time-frequency synchronization, shortens the wake-up time of the terminal device, and reduces the power consumption of the terminal device.

After the terminal device wakes up, the auxiliary time-frequency synchronization is performed through TRS, then only one SSB needs to be parsed to complete synchronization. Without TRS for auxiliary time-frequency synchronization, three SSBs may need to be parsed to complete synchronization. The terminal device performs auxiliary time-frequency synchronization through TRS, which can shorten the PO demodulation time, thereby reducing the wake-up time of the terminal device and reducing the power consumption of the terminal device.

In another embodiment, after receiving the PEI, the terminal device can know in advance the monitoring state of the PO in the current and subsequent at least one PF according to the indication information, can continue to sleep at the subsequent paging occasions that do not need to be monitored, and only wake up at the subsequent paging occasions that need to be monitored. Thus, frequent wake-up and search space detection are avoided in each PO, and the power consumption of the terminal device is reduced by reducing the wake-up times. The indication information can also pre-indicate whether the TRS of the PO in the at least one PF is available, especially for pre-indicating whether the TRS of the paging occasion that needs to be monitored in the at least one PF is available. When PO needs to be monitored and the TRS is available, time-frequency synchronization is directly performed through TRS, which shortens the wake-up time of the terminal device, and reduces the power consumption of the terminal device by reducing the wake-up time.

In this embodiment, the method includes receiving the PEI, and determining the monitoring state of at least one PO of at least one PF and/or the available state of the TRS through the indication information in the PEI, and then determining whether to monitor the paging message according to the monitoring state, and/or determining whether to perform time-frequency synchronization through the TRS according to the available state of the TRS. During the paging process, the power consumption of the terminal device is reduced by reducing the number of times the terminal device wakes up and/or reducing the wake-up time of the terminal device, thereby achieving the purpose of saving power of the terminal device.

The present disclosure supports the available indication of TRS/CSI-RS through PEI (that is, TRS-related indication information in PEl), and support the available indication of TRS/CSI-RS corresponding to at least one PO. The specific implementation ideas are as follows:
If the available indications of the TRS/CSI-RS corresponding to each PO are different, one PEI indicates the available state of the TRS/CSI-RS at the corresponding position of at least one PF, which saves signal resources than placing a PEI in front of each PO of each PF to indicate the available state of TRS/CSI-RS. TRS/CSI-RS can also assist downlink synchronization and shorten the PO demodulation duration. The manner in which the PEI discontinuously indicates the available state of the TRS is basically the same as the manner in which the PEI discontinuously indicates the monitoring state of the PO.

On the basis of the above embodiments, the inventor found that the indication information of one PEI can continuously indicate at least one PO in the PF, but this way of continuously indicating at least one PO especially takes up the available resources of the PEI, for example, the PEI is DCI-based PEI (paging indication is carried by means of DCI bit mapping), the way that the PEI continuously indicates at least one PO especially wastes the resources occupied by the DCI bit. For example, as shown in FIG. 4, if a PF has 12 POs, and 12 PFs are continuously indicated, 144 bits are required, resulting in a waste of bits. For example, if the PEI is SSS-based PEI (PEI is carried by means of Secondary Synchronization Signal (SSS) reference signal mapping) or TRS-based PEI, 144 sequences are required based on the SSS sequence or the TRS sequence to continuously indicate PO, which results in a waste of sequences.

Based on the above problems, the present disclosure further provides another embodiment. The indication information of one PEI discontinuously indicates the monitoring state of at least one PO and/or the available state of TRS at each PF preset mapping position in the at least one PF. The preset mapping position can be the same position in each PF (that is, the PO has the same sorting position in the PF). That is, the indication information may indicate the monitoring state of the PO at the same position in at least one PF, and in an optional implementation manner, it may be at least one of the following:
The indication information of the first PEI in the first PF discontinuously indicates: the first PO of the first PF, the first PO of the second PF, and the first PO of the third PF.

The indication information of the second PEI in the first PF discontinuously indicates: the second PO of the first PF, the second PO of the second PF, and the second PO of the third PF.

The indication information of the third PEI in the first PF discontinuously indicates: the third PO of the first PF, the third PO of the second PF, and the third PO of the third PF.

The above is just a detailed explanation of the same position, which may include but is not limited to three PFs, and also includes but is not limited to three POs per PF.

The preset mapping position may also be a non-identical position in each PF, as long as the PEI completes the discontinuous indication of all POs in at least one PF. For example, the indication information of the PEI discontinuously indicates the POs at the positions whose sorting positions are incremented one by one in at least one PF until all the POs in the PF are indicated. That is, the indication information may indicate the monitoring state of PO at different positions of at least one PF, and in an optional implementation manner, it may be at least one of the following:
The indication information of the first PEI in the first PF discontinuously indicates: the first PO of the first PF, the second PO of the second PF, and the third PO of the third PF.

The indication information of the second PEI in the first PF discontinuously indicates: the second PO of the first PF, the third PO of the second PF, and the first PO of the third PF.

The indication information of the third PEI in the first PF discontinuously indicates: the third PO of the first PF, the first PO of the second PF, and the second PO of the third PF.

The above is just a detailed explanation of the non-identical positions, which may include but are not limited to three PFs, and also include but are not limited to three POs per PF.

In this embodiment, the indication information of one PEI discontinuously indicates at least one PO at each PF preset mapping position in the at least one PF, which saves the available signal resources of the PEI. For example, the DCI-based PEI is taken as an example. There are 2 PFs, each PF has 4 POs, and 2 PFs are continuously indicated by one PEI, which requires 8 DCI bits. However, one PEI discontinuously indicates the first PO of 2 PFs, then 2 PFs only need 2 DCI bits. Similarly, the PEI uses SSS-based PEI or TRS-based PEI to discontinuously indicate the PO of multiple PFs, which can also save sequence resources. That is, the indication information of one PEI discontinuously indicates the PO at each PF preset mapping position in at least one PF, which can save the DCI bit or the reference signal sequence, that is, the PEI discontinuously indicates the PO, which can save the signal resources for the indication.

To help understand the technical solution, a specific PEI scenario is used as an example to illustrate:
In a scenario where a PF has only one PEI:
As shown in FIG. 5, SearcheSpaceld=0, Ns=1, N=T/16, T=32, then N=32/16=2. That is, when there are 32 radio frames in one DRX cycle, there are 2 PFs in one DRX cycle, and each PF has one PO. The PEI before the first PO of PF0 discontinuously indicates the monitoring state of a single PO of PF0 and PF1.

As shown in FIG. 9, SearcheSpaceld=0, Ns=1, N=T/16, T=32, then N=32/16=2. That is, when there are 32 radio frames in one DRX cycle, there are 2 PFs in one DRX cycle, and each PF has one PO. The PEI before the first PO of PF0 discontinuously indicates whether the TRS corresponding to a single PO of PF0 and PF1 is available.

The PEI discontinuously indicates the monitoring state of at least one PO and the available state of TRS at each PF preset mapping position in the at least one PF, that is, as shown in FIG. 5 and FIG. 9, the PEI indicates both the monitoring state of the PO and the available state of the TRS. For example, as shown in FIG. 14, SearcheSpaceld=0, Ns=1, N=T/16, T=32, then N=32/16=2. That is, when there are 32 radio frames in one DRX cycle, there are 2 PFs in one DRX cycle, and each PF has Ns=1 PO. The PEI before the first PO of PF0 discontinuously indicates the monitoring state of the single PO of PF0 and PF1, and also discontinuously indicates whether the TRS corresponding to the single PO of PF0 and PF1 is available.

The monitoring state may include at least one of the following: monitoring, no monitoring, or partial monitoring and partial non-monitoring, and/or, the available state may include at least one of the following: available, unavailable, or partially available and partially unavailable.

In a scenario where a PF include multiple PEls.

As shown in FIG. 6, SearcheSpaceld=1 , Ns=4, N=T/8; T=32; then N=32/8=4. That is, when there are 32 radio frames in one DRX cycle, there are N=4 PFs in one DRX cycle, and each PF has four POs. The indication information of PEI before PO0 of PF0 discontinuously indicates PO0 of PF0 to PF3. The indication information of PEI before PO1 of PF0 discontinuously indicates PO1 of PF0 to PF3. The indication information of PEI before PO2 of PF0 discontinuously indicates the PO2 of PF0 to PF3. The indication information of PEI before PO3 of PF0 discontinuously indicates PO3 of PF0 to PF3. PF0 to PF3 are in the same DRX cycle, and PF0 to PF3 are also in the same group. Optionally, regarding the fact that the PFs of multiple DRX cycles belong to one or more groups, the logic of the indication information of the PEI is basically the same, which is not repeated here.

The inventors found that if one PEI continuously indicates multiple POs, the PEI may only indicate partial PF in one DRX cycle, in a scenario where the paging rate is very low, the terminal device only knows the monitoring state of at least one PO of some PFs in one DRX cycle and/or whether time-frequency synchronization is performed through TRS. Unnecessary wake-up times and/or unnecessary wake-up time can only be avoided for at least one PO of a small part of PF in one DRX cycle, and the purpose of better power consumption reduction cannot be achieved. In an embodiment, in order to solve this deficiency, the method of determining or generating the grouping information includes at least one of the following:
determining a PF of at least one group within at least one DRX cycle; and
generating the PF of at least one group within at least one DRX cycle based on a first number and/or a second number.

Before receiving the PEI, the terminal device may first determine the grouping state of the PF, and one PEI may indicate the monitoring state of at least one PO and/or the available state of the TRS of multiple PFs in a group. For example, one PEI indicates the PO at the preset mapping positions of multiple PFs in a group, which can be PFs in one DRX cycle to form a group, or, PFs in one DRX cycle to form multiple groups, or PFs in multiple DRX cycles to form one group.

Since the indication information of one PEI discontinuously indicates the discontinuous PO of multiple PFs in one group, each PEI is only used to indicate the monitoring state of one PO and/or the available state of TRS of each PF in one group, so each PEI can indicate the PF of the whole or most of the DRX cycle. When the terminal device is in a low paging rate scenario, only Ns POs in the first PF in one group need to be parsed (each PF corresponds to Ns POs), it is possible to know the monitoring state of Ns POs in the PF and/or the available state of TRS in one DRX cycle or multiple DRX cycles. In this way, the terminal device can be prevented from being woken up at paging occasions that do not need to be monitored, and the terminal device can be in a dormant state for a long time, thereby reducing power consumption. The terminal device obtains the available state of the TRS corresponding to the PO according to the PEI, and uses the TRS to perform auxiliary time-frequency synchronization, thereby shortening the wake-up time, thereby saving power consumption.

In orderto assist the understanding of the technical solution, a specific PEI scenario is used as an example to illustrate.

When one PF includes multiple PEls, and one DRX cycle includes multiple groups, as shown in FIG. 7, SearcheSpaceld=0, Ns=2, N=T/4, T=256, N=256/4=64, that is, when there are 256 radio frames in one DRX Cycle, there are 64 PFs in one DRX cycle, and each PF has 2 POs, then the PO in the entire DRX cycle is divided into two groups (i.e., group 1 and group 2) for PEI indication.

It should be noted that, as shown in FIG. 7, the indication information of the PEI may indicate the TRS of each PF in group 1 and group 2. As shown in FIG. 10, SearcheSpaceld=0, Ns=2, N=T/4, T=256, N=256/4=64, that is, when there are 256 radio frames in one DRX Cycle, there are 64 PFs in one DRX cycle, and each PF has 2 POs, then the PO in the entire DRX cycle is divided into two groups (i.e., group 1 and group 2) for PEI indication.

As for an embodiment shown in FIG. 10, if the PEI is DCI-based PEI, and the number of bits used for PEI indication is 48, it is given according to the scenario that one PEI can indicate L=32 PFs. The design diagram of the embodiment is only used to represent the scheduling process, and does not indicate that the scheduled PFs are parallel scheduling, that is, PF0, PF1, ... , PF63 are arranged in chronological order. The grouping method and the indication method of PEI discontinuity indicating TRS in FIG. 10 are also applicable to FIG. 7, FIG. 8a and FIG. 8b. In FIG. 7, FIG. 8a, and FIG. 8b, the PEI can simultaneously indicate the available state of the TRS corresponding to the PO. In order to more intuitively reflect the application of the grouping method and the indication method in FIG. 10, the PEI discontinuous indication can be added in FIG. 10 to indicate the monitoring state of at least one PO of each group of PFs. Referring to FIG. 15, the PEI discontinuously indicates the monitoring state of the PO and the available state of the TRS at the position corresponding to each PF in each group.

As shown in FIG. 8a and FIG. 8b, SearcheSpaceld=1, Ns=4, N=T/2, T=256, then N=256/2=128. That is, when there are 256 radio frames in one DRX Cycle, there are 128 PFs in one DRX cycle, each PF has 4 POs, then the PO in the entire DRX cycle is divided into four groups (i.e., group 1, group 2, group 3 and group 4) for PEI indication.

Regarding the generation method of the grouping information: according to the first number and/or the second number, the PF of at least one group in at least one DRX cycle is generated.

The first number is the number of PFs included in the DRX cycle, and the second number is the number of identifiers bearing the indication information of the PEI. It is determined which paging frames of the DRX cycle are the PF of at least one group within at least one DRX cycle according to the first number and/or the second number. For example, according to the first number and the second number, the number L of PFs in one group is determined.

For ease of understanding, assume that the first number is N, the second number is G, and the total number of radio frames in one DRX cycle is T. Based on the protocol relationship in Table 2, it can be known that the number of PFs in one group are L, and *L* = 2^{x} <= *G*. For scenarios where there are more than L PFs in one DRX cycle (i.e., N>L), a classification indication can be made for each L PFs to form a group. The benefit of indicating only L PFs for the entire DRX cycle is the saving of DCI bits or reference signal sequences. In this way, only L DCI bits or reference signal sequences are required at most to indicate the entire DRX cycle. The value of L depends on the number of DCI bits or the number of reference signal sequences (that is, the second number G) ultimately used to carry PEI. For example, based on *L* = 2^{x} <= *G*, DCI-based PEI has 48 bits (i.e., G=48), then L is 32; DCI-based PEI has 12 bits (i.e., G=12), then L is 8.

For the embodiment in FIG. 7, it is assumed that DCI-based PEI has 48 bits, and one PEI indicates 32 PFs. The design diagram of the embodiment is only used to represent the scheduling process, and does not indicate that the scheduled PFs are parallel scheduling, that is, PF0, PF1, . . . , PF63 are arranged in chronological order.

According to the 38.304 and 38.331 protocols, the meanings of the Paging related parameters are summarized, as shown in Table 3. According to the possible values of high-level signaling, the number of PFs that may exist in one DRX cycle is summarized in Table 4.

It can be seen from Table 4 that there may be too much PF in one DRX cycle, in order to save the DCI bit or reference signal sequence, the classification is done according to the number of different PFs in the DRX cycle. The purpose is to use as many bits or reference signal sequences as possible to indicate the PF in the DRX cycle, so as to ensure that the terminal device can be in a dormant state for a longer time under low paging rate to reduce power consumption.

**Table 3**

| Parameter | Note |
|---|---|
| T | RRC_IDLE: min{UE-specific cycle configured by NAS, defaultPagingCycle in SIB1} |
| | RRC_INACTIVE: min{UE-specific cycle configured by NAS, defaultPagingCycle in SIB1, ran-PagingCycle carried in RRCRelease message} |
| PF_offset | This offset is used to determine PF. Its value is specified by PCCH-Config ->nAndPagingFrameOffset of SIB1 |
| N | N is used to determine how many PFs are included in each DRX cycle. Its value is specified by PCCH-Config->nAndPagingFrameOffset of SIB1, see the introduction of this field for details |
| Ns | Ns indicates how many POs correspond to each PF. Its value is specified by PCCH-Config->ns of SIB1 |
| UE_ID | UE_ID=5G-S-TMSI mod 1024 |

**Table 4**

| | | | | |
|---|---|---|---|---|
| N | 32 | 64 | 128 | 256 |
| T | | | | |
| T | 32 | 64 | 128 | 256 |
| T/2 | 16 | 32 | 64 | 128 |
| T/4 | 8 | 16 | 32 | 64 |
| T/8 | 4 | 8 | 16 | 32 |
| T/16 | 2 | 4 | 8 | 16 |

In an embodiment, meeting the preset condition includes at least one of the following:
At least one PF indicated by the indication information exists in the at least one group;
The PEI is located before the corresponding PO in the first PF in the same group, and at least one PF indicated by the indication information exists in the at least one group. During paging,
   (1) If there is only one group in one DRX cycle, one PEI is placed before each of the Ns POs of the first PF in one DRX cycle. The indication information of the PEI respectively indicates whether the PO at the corresponding position of each PF in the entire DRX cycle needs to be monitored and/or whether the corresponding TRS/CSI-RS is available. The terminal device is woken up and monitored only at paging occasions that need to be monitored, and/or when the PO needs to be monitored and TRS is available, auxiliary time-frequency synchronization is performed through TRS.
   (2) If multiple DRX cycles belong to the same group, one PEI is placed before the Ns PO monitoring of the first PF of the first DRX cycle in the timing sequence. The indication information of the PEI respectively indicates whether the PO at the corresponding position of each PF in multiple DRX cycles needs to be monitored and/or whether the corresponding TRS is available. The terminal device is woken up and monitored only at paging occasions that need to be monitored, and/or when the PO needs to be monitored and TRS is available, auxiliary time-frequency synchronization is performed through TRS.
   (3) If one DRX cycle contains multiple groups, one PEI is placed before the Ns PO monitoring of the first PF of each group. The indication information of the PEI respectively indicates whether the PO at the corresponding position of each PF of each group needs to be monitored and/or whether the corresponding TRS is available. The terminal device is only woken up and monitored at paging occasions that need to be monitored, and/or time-frequency synchronization is performed through TRS when the PO needs to be monitored and TRS is available.

Before the operation S100, the processing method further includes receiving PEI. In an embodiment, receiving the PEI includes: receiving a PEI corresponding to a PO in at least one group of PFs of at least one DRX cycle.

The specific process of the terminal device receiving PEI is as follows: receiving the PEI of the corresponding PO of PFs in one or more groups in one DRX cycle, and the corresponding PO in the PF can be interpreted as the PO at the preset mapping position in the PF; receiving the PEI of the corresponding PO of PFs in a group in multiple DRX cycles; and receiving PEls of POs of PFs corresponding to multiple groups in multiple DRX cycles. The PEI precedes the corresponding PO in the first PF in the same group.

In an embodiment, the operation S200 includes at least one of the following:
indicating that at least one TRS of different PFs in at least one group is available;
monitoring at least one PO of different PFs in at least one group;
monitoring at least one PO of different PFs in at least one group and indicating that at least one TRS of different PFs in at least one group is available;
indicating that at least one TRS of different PFs in at least one group is not available;
not monitoring at least one PO of different PFs in at least one group;
not monitoring at least one PO of different PFs in at least one group and indicating that at least one TRS of different PFs in at least one group is not available;
monitoring at least one PO of different PFs in at least one group and not monitoring at least one PO of different PFs in at least one group;
indicating that at least one TRS of different PFs in at least one group is available and indicating that at least one TRS of different PFs in at least one group is not available;
monitoring at least one PO of different PFs in at least one group and indicating that at least one TRS of different PFs in at least one group is available, and not monitoring at least one PO of different PFs in at least one group and indicating that at least one TRS of different PFs in at least one group is available;
monitoring at least one PO of different PFs in at least one group and indicating that at least one TRS of different PFs in at least one group is available, and not monitoring at least one PO of different PFs in at least one group and indicating that at least one TRS of different PFs in at least one group is not available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is not available; and
not monitoring at least one PO of different PFs in at least one group and indicating that at least one TRS of different PFs in at least one group is available, and not monitoring at least one PO of different PFs in at least one group and indicating that at least one TRS of different PFs in at least one group is not available.

Operation S200 is further described in detail.

In an embodiment, the indication information of the PEI may indicate that the terminal device performs auxiliary time-frequency synchronization based on at least one TRS of different PFs in at least one group. That is, the available state of at least one TRS of different PFs in at least one group is available. The terminal device can perform auxiliary time-frequency synchronization based on at least one TRS of different PFs in at least one group according to the available state, so as to reduce the time-consuming time-frequency synchronization and reduce the power consumption of the terminal device.

In an embodiment, the indication information of the PEI may indicate that the terminal device monitors at least one PO of different PFs in at least one group. That is, at least one PO of different PFs in at least one group needs to be monitored. The terminal device can monitor at least one PO of different PFs in at least one group according to the monitoring state, and not monitor the PO whose monitoring state is no need to be monitored, thereby reducing the number of times the terminal device wakes up and reducing the power consumption of the terminal device.

In an embodiment, the indication information of the PEI may indicate that the terminal device monitors at least one PO of different PFs in at least one group and performs auxiliary time-frequency synchronization based on at least one TRS of different PFs in at least one group. That is, at least one PO of different PFs in at least one group needs to be monitored, and the available state of at least one TRS of different PFs in at least one group is available. The terminal device can monitor at least one PO of different PFs in at least one group according to the monitoring state, so as to reduce the number of times the terminal device wakes up. The terminal device can perform auxiliary time-frequency synchronization based on at least one TRS of different PFs in at least one group according to the available state, so as to reduce the time-consuming time-frequency synchronization and reduce the power consumption of the terminal device.

In an embodiment, the indication information of the PEI may indicate that the terminal device does not perform auxiliary time-frequency synchronization based on at least one TRS of different PFs in at least one group. That is, the available state of at least one TRS of different PFs in at least one group is unavailable, and the terminal device does not perform auxiliary time-frequency synchronization based on at least one TRS of different PFs in at least one group.

In an embodiment, the indication information of the PEI may indicate that the terminal device does not monitor at least one PO of different PFs in at least one group. That is, at least one PO of different PFs in at least one group doesn't need to be monitored, and the terminal device does not monitor at least one PO of different PFs in at least one group.

In an embodiment, the indication information of the PEI may indicate that the terminal device does not monitor at least one PO of different PFs in at least one group and does not perform auxiliary time-frequency synchronization based on at least one TRS of different PFs in at least one group. That is, at least one PO of different PFs in at least one group doesn't need to be monitored, and the available state of at least one TRS of different PFs in at least one group is unavailable. The terminal device does not monitor at least one PO of different PFs in at least one group and does not perform auxiliary time-frequency synchronization based on at least one TRS of different PFs in at least one group.

In an embodiment, the indication information of the PEI may indicate that the terminal device monitors at least one PO of different PFs in at least one group and does not monitor at least one PO of different PFs in at least one group. That is, the monitoring states of multiple POs of different PFs in at least one group are that some POs need to be monitored and some POs do not need to be monitored, and the terminal device monitors at least one PO of different PFs in at least one group and does not monitor at least one PO of different PFs in at least one group.

In an embodiment, the indication information of the PEI may indicate that the terminal device performs auxiliary time-frequency synchronization based on at least one TRS of different PFs in at least one group and does not perform auxiliary time-frequency synchronization based on at least one TRS of different PFs in at least one group. That is, the available states of multiple TRSs of different PFs in at least one group are partially available and partially unavailable. The terminal device performs auxiliary time-frequency synchronization based on at least one TRS of different PFs in at least one group, and simultaneously does not perform auxiliary time-frequency synchronization based on at least one TRS of different PFs in at least one group.

In an embodiment, the indication information of the PEI may indicate that the terminal device monitors at least one PO of different PFs in at least one group and performs auxiliary time-frequency synchronization based on at least one TRS of different PFs in at least one group, and does not monitor at least one PO of different PFs in at least one group and performs auxiliary time-frequency synchronization based on at least one TRS of different PFs in at least one group. That is, the monitoring states of multiple POs of different PFs in at least one group are that some POs need to be monitored and some POs do not need to be monitored, and the available state of at least one TRS of different PFs in at least one group is available. The terminal device monitors at least one PO of different PFs in at least one group and indicates that at least one TRS of different PFs in at least one group is available, and does not monitor at least one PO of different PFs in at least one group and indicates that at least one TRS of different PFs in at least one group is available.

In an embodiment, the indication information of the PEI may indicate that the terminal device monitors at least one PO of different PFs in at least one group and performs auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is partially available and partially unavailable. The terminal device monitors at least one PO of different PFs in at least one group and indicates that at least one TRS of different PFs in at least one group is available, and does not monitor at least one PO of different PFs in at least one group and indicates that at least one TRS of different PFs in at least one group is unavailable.

In an embodiment, the indication information of the PEI may indicate that the terminal device monitors at least one PO of different PFs in at least one group and does not perform auxiliary time-frequency synchronization based on at least one TRS of different PFs in at least one group, and does not monitor at least one PO of different PFs in at least one group and performs auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is partially available and partially unavailable. The terminal device monitors at least one PO of different PFs in at least one group and indicates that at least one TRS of different PFs in at least one group is unavailable, and does not monitor at least one PO of different PFs in at least one group and indicates that at least one TRS of different PFs in at least one group is available.

In an embodiment, the indication information of the PEI may indicate that the terminal device monitors at least one PO of different PFs in at least one group and does not perform auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is unavailable. The terminal device monitors at least one PO of different PFs in at least one group and indicates that at least one TRS of different PFs in at least one group is unavailable, and does not monitor at least one PO of different PFs in at least one group and indicates that at least one TRS of different PFs in at least one group is unavailable.

In an embodiment, the indication information of the PEI may indicate that the terminal device does not monitor at least one PO of different PFs in at least one group and performs auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring state of multiple POs of different PFs in at least one group is that POs do not need to be monitored, the available state of multiple TRSs of different PFs in at least one group is partially available and partially unavailable. The terminal device does not monitor at least one PO of different PFs in at least one group and indicates that at least one TRS of different PFs in at least one group is available, and does not monitor at least one PO of different PFs in at least one group and indicates that at least one TRS of different PFs in at least one group is unavailable.

In this embodiment, the indication information of PEI can discontinuously indicate that at least one PO of different PFs in one or more groups needs to be monitored, does not need to be monitored, or, some of POs need to be monitored and some of POs do not need to be monitored. TRS is available, TRS is unavailable or part of TRS is available and part of TRS is unavailable. The indication information may cover indicating the monitoring state of PO and/or the available state of the TRS in one or more PFs. The PEI may be located before each PO in the first PF in the same group, providing an implementation of PEI discontinuity indicating at least one PO of different PFs, which saves the number of identifiers (such as DCI bits or reference signal sequences) that carry PEI, and ensures that the terminal device can be in a dormant state for a longer time and/or can perform PO demodulation for a shorter time under a low paging rate, so as to reduce power consumption.

In an embodiment, the operation S100 includes:
S101, determining the PF of at least one group within at least one DRX cycle according to the grouping information; and
S102, determining the monitoring state of at least one PO of at least one PF of at least one group and/or the available state of the TRS within a same DRX cycle or different DRX cycles according to the indication information.

In an embodiment, the operation S102 includes at least one of the following:
when the PF within the DRX cycle is configured as a single group, parsing indication information in the PEI before each PO in a first PF of the single group, and determining the monitoring state of the PO and/or the available state of the TRS at a corresponding position of each PF of the single group. The monitoring state includes that PO needs to be monitored, does not need to be monitored, or, some of POs need to be monitored and some of POs do not need to be monitored. The available state includes that TRS is available, TRS is unavailable or part of TRS is available and part of TRS is unavailable.
when the PF within the DRX cycle is configured as multiple groups, parsing indication information in the PEI before each PO in a first PF of each group, and respectively determining the monitoring state of the PO and/or the available state of the TRS at a corresponding position of each PF of each group.

In an embodiment, the operation S102 includes at least one of the following:
when the PF within the DRX cycle is configured as a single group, parsing indication information in the PEI before each PO in a first PF of the single group, and determining the monitoring state of the PO and/or the available state of the TRS at corresponding positions of multiple non-consecutive PFs selected by a predetermined rule of the single group; and
when the PF within the DRX cycle is configured as multiple groups, parsing indication information in the PEI before each PO in a first PF of each group, and respectively determining the monitoring state of the PO and/or the available state of the TRS at corresponding positions of multiple non-consecutive PFs selected by a predetermined rule of each group.

The predetermined rule may be to determine a plurality of non-consecutive PFs by selecting the odd and even numbers of the PF sequence numbers in the group, selecting the arithmetic sequence, or the like. Different from each continuous PF in the group, the predetermined rule selects multiple non-consecutive PFs to apply to the situation of a single group and multiple groups.

In a feasible manner of the preset rule, the preset rule is an odd-even selection method. That is, the PF with odd or even sequence number is selected in a group, to parse the PEls before the POs before the first PF in the group, and determine the monitoring state of PO and/or the available state of TRS at positions corresponding to multiple non-consecutive PFs with odd or even sequence numbers.

In an embodiment, the preset rule is to select multiple non-consecutive PFs with odd sequence numbers. Referring to FIG. 16, a group includes 6 PFs, and each PF has 2 POs. The PFs in the group are PF0, PF1, PF2, PF3, PF4, and PF5, respectively. The PEI before PO0 and PO1 in the first PF0 of this group discontinuously indicates the monitoring state of PO and the available state of TRS at the corresponding positions in PF1, PF3, and PF5. It should be noted that, in this optional embodiment, a detailed explanation for selecting a plurality of non-consecutive PFs only for the preset rule may include but not limited to 6 PFs, and also include but not limited to 2 POs per PF.

In an embodiment, the preset rule is to select multiple non-consecutive PFs with even sequence numbers. For example, a group includes 12 PFs. The PEI of the first PF in the group discontinuously indicates the monitoring state of the PO and/or the available state of the TRS at the corresponding positions of PF2, PF4, PF6, PF8, PF10, and PF12.

In an embodiment, the preset rule is to select multiple non-consecutive PFs whose sequence numbers are arithmetic progressions. For example, a group includes 12 PFs, the arithmetic sequence is a sequence with the first item 0 and the tolerance is 3, and the arithmetic sequence is 0, 3, 6, 9, 12. Therefore, the PEI of the first PF in the group discontinuously indicates the monitoring state the PO and/or the available state of the TRS at the corresponding positions of PF3, PF6, PF9, and PF12.

In an embodiment, the operation S200 includes at least one of the following:
in response to the indication information identification unit, monitoring the PO;
in response to the indication information identification unit, synchronizing via the TRS;
in response to the indication information identification unit, monitoring the PO and synchronizing via the TRS;
in response to the indication information identification unit, not monitoring the PO;
in response to the indication information identification unit, not synchronizing via the TRS; and
in response to the indication information identification unit, not monitoring the PO and not synchronizing via the TRS.

When the PEI is DCI-based, multiple bits in PEI discontinuously indicate the monitoring state of POs at the same position of multiple PFs. That is, if the identification unit (such as a bit) of the indication information is the first value (such as 1), the PO indicated by this identification unit needs to be monitored, and the PDCCH and/or PDSCH of the PO indicated by this identification unit are monitored. If the identification unit (such as a bit) of the indication information is the second value (such as 0), the PO indicated by the identification unit doesn't need to be monitored, and the PDCCH and/or PDSCH of the PO indicated by the identification unit are not monitored.

For example, PEI is 0101, that is, the identification unit of the indication information is 0101, which in turn discontinuously indicates PO1 at the same position in PF0, PF1, PF2 and PF3. Then, the PDCCH and/or PDSCH of PO1 of PF0 are not monitored, the PDCCH and/or PDSCH of PO1 of PF1 are monitored, the PDCCH and/or PDSCH of PO1 of PF2 are not monitored, and the PDCCH and/or PDSCH of PO1 of PF3 are monitored.

When the indication information of PEI is a reference signal sequence, the identification unit (e.g., subsequence) of the reference signal sequence is the first value, the PDCCH and/or PDSCH of the PO indicated by the identification unit is monitored; the identification unit (e.g., subsequence) of the reference signal sequence is the second value, and the PDCCH and/or PDSCH of the PO indicated by the identification unit are not monitored.

Based on the same principle, when TRS available information is carried by the multiple bits of DCI-based PEI, the multiple bits of the indication information indicate the available state of the TRS corresponding to the PO at the same position of the multiple PFs. If the identification unit (such as a bit) of the indication information is the first value (such as 1), the available state of the TRS corresponding to the PO indicated by this identification unit is available, and it is determined that the TRS corresponding to the PO indicated by this identification unit is applied to the auxiliary time-frequency synchronization before the PO demodulation. If the identification unit (such as a bit) of the indication information is the second value (such as 0), the available state of the TRS corresponding to the PO indicated by the identification unit is unavailable, and it is determined that the TRS corresponding to the PO indicated by the identification unit is not used for auxiliary time-frequency synchronization before PO demodulation.

For example, PEI is 0101. That is, the identification unit of the indication information is 0101, which in turn discontinuously indicates the TRS at the same position in PF0, PF1, PF2 and PF3, then the TRS corresponding to PO1 of PF0 is unavailable, the TRS corresponding to PO1 of PF1 is available, the TRS corresponding to PO1 of PF2 is unavailable, and the TRS corresponding to PO1 of PF3 is available.

When the TRS available information is carried by sequence-based PEI, the identification unit (such as a subsequence) of the reference signal sequence is the first value, then the TRS corresponding to the PO indicated by the identification unit can be available and can be applied to time-frequency synchronization before PO demodulation. If the identification unit (such as a subsequence) of the reference signal sequence is the second value, the TRS corresponding to the PO indicated by the identification unit is unavailable.

When the identification unit of PEI is used to indicate both the monitoring state of PO and the available state of TRS, the PEI indication information is explained as follows (taking DCI-based PEI as an example, Sequence-based PEI has the same analysis).

For example, PEI is 01010001. That is, the identification unit of PO monitoring state indication information (that is, PO indication) is 0101, and the identification unit of TRS available state indication information (that is, TRS available indication) is 0001. PEI successively indicates PO1 at the same position in PF0, PF1, PF2 and PF3, PO1 of PF0 is not monitored and the TRS corresponding to PO1 of PF0 is unavailable, PO1 of PF1 is monitored and the TRS corresponding to PO1 of PF1 is unavailable, PO1 of PF2 is not monitored and the TRS corresponding to PO1 of PF2 is unavailable, PO1 of PF3 is monitored and the TRS corresponding to PO1 of PF3 is available and can be applied to auxiliary time-frequency synchronization before PO demodulation.

When the PF included in the DRX cycle contains only one PO, that is, Ns=1, and the number of PFs is relatively small, for example, the number of PFs is 2, 4, 8, etc., Then, it is only necessary to place a PEI carrying a TRS available indication (i.e., TRS available state related indication information) before at least one PO of the first PF to indicate the available state of TRS in the entire DRX cycle.

When the available indication ofTRS corresponding to each PO is random, and each PF in the DRX cycle contains at least one PO, and the number of PFs in the DRX cycle is relatively large. For example, there are 128 PFs in each DRX cycle, etc. The PFs in the entire DRX cycle need to be grouped according to the bits that the PEI can represent, and the PEI is only placed before each PO in the first PF of each group to indicate the available state of TRS in the entire group.

In the present disclosure, the PEI can indicate only the monitoring state of the PO, or only the available state of the TRS corresponding to the PO, or can simultaneously indicate both the monitoring state of the PO and the available state of the TRS corresponding to the PO. As shown in FIG. 11a and FIG. 11b, a technical solution in which the PEI simultaneously indicates the monitoring state of the PO and the available state of the TRS is given, and the example takes DCI-based as an example, and the design of Sequence-based PEI has the same technical solution. The above-mentioned embodiments and the examples of FIG. 5 to FIG. 10 provide a schematic diagram in which the PEI only indicates the monitoring state of the PO or the PEI only indicates the available state of the TRS corresponding to the PO. In fact, the PEI can also simultaneously indicate the monitoring state of the PO and the available state of the TRS, as shown in the examples of FIG. 14 to FIG. 16.

The purpose of the TRS available indication is to make the terminal device know in advance whether the TRS exists, and when PO demodulation needs to be performed, it is used to assist the SSB to achieve better downlink synchronization, thereby ensuring the success rate of PO demodulation. Based on this, this patent also proposes that whether the TRS available indication needs to be indicated can be determined according to whether the PO in the PEI needs to be monitored. That is, if the bit indicating the monitoring state of PO in the PEI is 0, that is, there is no need to monitor the PO, the TRS available indication does not need to occupy the bit, and can be replaced by a preset reserved bit. In this way, the PEI indication bit can be further saved. The design scheme is also applicable to SSS-based orTRS-based PEI.

As shown in FIG. 11a, assuming that PEI indicates the bit indicated by PO: 0 means that there is no need to monitor this PO, 1 means that this PO needs to be monitored. TRS available indication in PEI: 0 bit means that TRS is not available, 1 means that TRS is available, reserved bit means that the current bit does not need to be occupied for the time being. As shown in FIG. 11b, the TRS available indication given in the PEI is valid only when the PO needs to be monitored. The bit design in FIG. 11b is that one PO indication corresponds to one TRS available indication, but only when the bit indicated by PO is 1, the TRS available indication needs to be parsed for availability and unavailability.

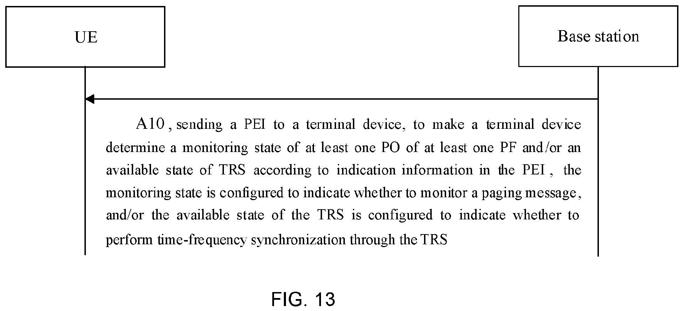

In order to reduce the power consumption of the UE during the process of receiving the paging message, the present disclosure further provides a processing method, applied to a network device. Referring to FIG. 13 , the method includes the following operations:
A10, sending a PEI to a terminal device, to make a terminal device determine a monitoring state of at least one PO of at least one PF and/or an available state of TRS according to indication information in the PEI;
the monitoring state is configured to indicate whether to monitor a paging message, and/or the available state is configured to indicate whether to perform time-frequency synchronization through the TRS.

The network device sends a PEI to the terminal device; the PEI is used to determine the monitoring state of at least one PO of at least one PF and/or the available state of TRS.

The monitoring state is used to indicate the terminal device to determine whether to monitor the paging message, and/or the available state is used to indicate whether the TRS is available.

The network device sends a PEI to the terminal device, the PEI includes indication information, and the indication information of the PEI is used to determine the monitoring state of at least one PO of the at least one PF and/or the available state of the TRS. The monitoring state is used to indicate the terminal device to determine whether to monitor the paging message, and/or the available state is used to indicate determine whether the TRS is available.

In an embodiment, the indication information can be used to indicate the monitoring state of POs in at least one PF at the current time and after the current time, that is, the indication information can indicate in advance whether POs in at least one PF need to be monitored. After receiving the PEI, the terminal device can know the monitoring state of the PO in the subsequent at least one PF in advance according to the indication information. The terminal device can continue to sleep at the subsequent paging occasions when the monitoring is not required, and only wake up at the subsequent paging occasions when monitoring is required. Therefore, the terminal device can be woken up in a targeted manner according to the indication information in the PEI and the monitoring state of the PO, so as to prevent the terminal device from being frequently woken up to perform search space detection at each paging occasion, thereby saving the power consumption of the terminal device.

In another embodiment, the indication information may indicate the available state of the TRS corresponding to the PO in the at least one PF at the current moment and after the current moment, that is, the indication information can pre-indicate whether the TRS of the PO in the at least one PF is available. After receiving the PEI, the terminal device knows in advance the available state of the TRS corresponding to the PO in the subsequent at least one PF according to the indication information. When the subsequent TRS is available and PO monitoring needs to be performed, auxiliary time-frequency synchronization can be performed through the TRS to quickly realize downlink synchronization and complete PO demodulation. In this way, it is possible to reduce the number of SSBs used by the terminal device for downlink synchronization, shorten the synchronization duration of the terminal device, and reduce the power consumption of the terminal device.

If the terminal device has TRS for auxiliary time-frequency synchronization, only one SSB need to be parsed. However, if there is no TRS for auxiliary time-frequency synchronization, three SSBs may need to be parsed, reducing the number of SSBs for downlink synchronization, which can shorten the downlink synchronization duration, thereby reducing the duration for waking up the terminal device.

In another embodiment, the indication information may indicate the monitoring state of the PO in at least one PF and the available state of the corresponding TRS at the current moment and after the current moment. That is, the indication information may indicate in advance whether the PO in at least one PF needs to be monitored and whether the corresponding TRS is available. After receiving the PEI, the terminal device can know in advance the monitoring state of the PO in the subsequent at least one PF according to the indication information. The terminal device can continue to sleep at the subsequent paging occasions that do not need to monitor, and only wake up at the subsequent paging occasions that need to monitor. Therefore, the terminal device is prevented from being frequently woken up at each paging occasion to perform search space detection, which increases the sleep duration of the paging occasion, and reduces the power consumption of the terminal device. The indication information may further indicate in advance whether the TRS corresponding to the PO in the at least one PF is available, and may particularly indicate in advance whether the corresponding TRS of the PO that needs to be monitored by the at least one PF is available. When monitoring is required and the TRS is available for paging occasions, the terminal device can choose to perform auxiliary time-frequency synchronization through the TRS, thereby shortening the time for the terminal device to perform PO demodulation, and saving power consumption of the terminal device.

The present disclosure supports the available indication of TRS/CSI-RS through PEI (that is, TRS-related indication information in PEl), and support the available indication of TRS/CSI-RS corresponding to at least one PO. The specific implementation ideas are as follows:
If the available indications of the TRS/CSI-RS corresponding to each PO are different, one PEI indicates the available state of the TRS/CSI-RS at the corresponding position of at least one PF, which saves signal resources than placing a PEI in front of each PO of each PF to indicate the available state of TRS/CSI-RS. TRS/CSI-RS can also assist downlink synchronization and shorten the PO demodulation duration. The manner in which the PEI discontinuously indicates the available state of the TRS is basically the same as the manner in which the PEI discontinuously indicates the monitoring state of the PO.

On the basis of the above embodiments, the inventor found that the indication information of one PEI can continuously indicate at least one PO in the PF, but this way of continuously indicating at least one PO especially takes up the available resources of the PEI, for example, the PEI is DCI-based PEI (paging indication is carried by means of DCI bit mapping), the way that the PEI continuously indicates at least one PO especially wastes the resources occupied by the DCI bit. For example, as shown in FIG. 4, if a PF has 12 POs, and 12 PFs are continuously indicated, 144 bits are required, resulting in a waste of bits. For example, if the PEI is SSS-based PEI (PEI is carried by means of Secondary Synchronization Signal (SSS) reference signal mapping) or TRS-based PEI, 144 sequences are required based on the SSS sequence or the TRS sequence to continuously indicate PO, which results in a waste of sequences.

Based on the above problems, the present disclosure further provides another embodiment. The indication information of one PEI discontinuously indicates the monitoring state of at least one PO and/or the available state of TRS at each PF preset mapping position in the at least one PF. The preset mapping position can be the same position in each PF (that is, the PO has the same sorting position in the PF). That is, the indication information may indicate the monitoring state of the PO at the same position in at least one PF, and in an optional implementation manner, it may be at least one of the following:
The indication information of the first PEI in the first PF discontinuously indicates: the first PO of the first PF, the first PO of the second PF, and the first PO of the third PF.

The indication information of the second PEI in the first PF discontinuously indicates: the second PO of the first PF, the second PO of the second PF, and the second PO of the third PF.

The indication information of the third PEI in the first PF discontinuously indicates: the third PO of the first PF, the third PO of the second PF, and the third PO of the third PF.

The above is just a detailed explanation of the same position, which may include but is not limited to three PFs, and also includes but is not limited to three POs per PF.

The preset mapping position may also be a non-identical position in each PF, as long as the PEI completes the discontinuous indication of all POs in at least one PF. For example, the indication information of the PEI discontinuously indicates the POs at the positions whose sorting positions are incremented one by one in at least one PF until all the POs in the PF are indicated. That is, the indication information may indicate the monitoring state of PO at different positions of at least one PF, and in an optional implementation manner, it may be at least one of the following:
The indication information of the first PEI in the first PF discontinuously indicates: the first PO of the first PF, the second PO of the second PF, and the third PO of the third PF.

The indication information of the second PEI in the first PF discontinuously indicates: the second PO of the first PF, the third PO of the second PF, and the first PO of the third PF.

The indication information of the third PEI in the first PF discontinuously indicates: the third PO of the first PF, the first PO of the second PF, and the second PO of the third PF.

The above is just a detailed explanation of the non-identical positions, which may include but are not limited to three PFs, and also include but are not limited to three POs per PF.

In this embodiment, the indication information of one PEI discontinuously indicates at least one PO at each PF preset mapping position in the at least one PF, which saves the available signal resources of the PEI. For example, the DCI-based PEI is taken as an example. There are 2 PFs, each PF has 4 POs, and 2 PFs are continuously indicated by one PEI, which requires 8 DCI bits. However, one PEI discontinuously indicates the first PO of 2 PFs, then 2 PFs only need 2 DCI bits. Similarly, the PEI uses SSS-based PEI or TRS-based PEI to discontinuously indicate the PO of multiple PFs, which can also save sequence resources. That is, the indication information of one PEI discontinuously indicates the PO at each PF preset mapping position in at least one PF, which can save the DCI bit or the reference signal sequence, that is, the PEI discontinuously indicates the PO, which can save the signal resources for the indication.

To help understand the technical solution, a specific PEI scenario is used as an example to illustrate:
In a scenario where a PF has only one PEI:
As shown in FIG. 5, SearcheSpaceld=0, Ns=1, N=T/16, T=32, then N=32/16=2. That is, when there are 32 radio frames in one DRX cycle, there are 2 PFs in one DRX cycle, and each PF has one PO. The PEI before the first PO of PF0 discontinuously indicates the monitoring state of a single PO of PF0 and PF1.

As shown in FIG. 9, SearcheSpaceld=0, Ns=1, N=T/16, T=32, then N=32/16=2. That is, when there are 32 radio frames in one DRX cycle, there are 2 PFs in one DRX cycle, and each PF has one PO. The PEI before the first PO of PF0 discontinuously indicates whether the TRS corresponding to a single PO of PF0 and PF1 is available.

The PEI discontinuously indicates the monitoring state of at least one PO and the available state of TRS at each PF preset mapping position in the at least one PF, that is, as shown in FIG. 5 and FIG. 9, the PEI indicates both the monitoring state of the PO and the available state of the TRS. For example, as shown in FIG. 14, SearcheSpaceld=0, Ns=1, N=T/16, T=32, then N=32/16=2. That is, when there are 32 radio frames in one DRX cycle, there are 2 PFs in one DRX cycle, and each PF has Ns=1 PO. The PEI before the first PO of PF0 discontinuously indicates the monitoring state of the single PO of PF0 and PF1, and also discontinuously indicates whether the TRS corresponding to the single PO of PF0 and PF1 is available.

The monitoring state may include at least one of the following: monitoring, no monitoring, or partial monitoring and partial non-monitoring, and/or, the available state may include at least one of the following: available, unavailable, or partially available and partially unavailable.

In a scenario where a PF include multiple PEls.

As shown in FIG. 6, SearcheSpaceld=1, Ns=4, N=T/8; T=32; then N=32/8=4. That is, when there are 32 radio frames in one DRX cycle, there are N=4 PFs in one DRX cycle, and each PF has four POs. The indication information of PEI before PO0 of PF0 discontinuously indicates PO0 of PF0 to PF3. The indication information of PEI before PO1 of PF0 discontinuously indicates PO1 of PF0 to PF3. The indication information of PEI before PO2 of PF0 discontinuously indicates the PO2 of PF0 to PF3. The indication information of PEI before PO3 of PF0 discontinuously indicates PO3 of PF0 to PF3. PF0 to PF3 are in the same DRX cycle, and PF0 to PF3 are also in the same group. Optionally, regarding the fact that the PFs of multiple DRX cycles belong to one or more groups, the logic of the indication information of the PEI is basically the same, which is not repeated here.

The inventors found that if one PEI continuously indicates multiple POs, the PEI may only indicate partial PF in one DRX cycle, in a scenario where the paging rate is very low, the terminal device only knows the monitoring state of at least one PO of some PFs in one DRX cycle and/or whether time-frequency synchronization is performed through TRS. Unnecessary wake-up times and/or unnecessary wake-up time can only be avoided for at least one PO of a small part of PF in one DRX cycle, and the purpose of better power consumption reduction cannot be achieved. In an embodiment, in order to solve this deficiency, before the operation A10, the method further includes:
A00, determine the grouping state of at least one DRX cycle.

Before the network device sends the PEI to the terminal device, the network device can first configure the grouping state of the PF. One PEI may indicate the monitoring state of at least one PO and/or the available state of the TRS of multiple PFs in a group. For example, one PEI indicates the PO at the preset mapping positions of multiple PFs in a group, which can be PFs in one DRX cycle to form a group, or, PFs in one DRX cycle to form multiple groups, or PFs in multiple DRX cycles to form one group.

Since the indication information of one PEI discontinuously indicates the discontinuous PO of multiple PFs in one group, each PEI is only used to indicate the monitoring state of one PO and/or the available state of TRS of each PF in one group, so each PEI can indicate the PF of the whole or most of the DRX cycle. When the terminal device is in a low paging rate scenario, only Ns POs in the first PF in one group need to be parsed (each PF corresponds to Ns POs), it is possible to know the monitoring state of Ns POs in the PF and/or the available state of TRS in one DRX cycle or multiple DRX cycles. In this way, the terminal device can be prevented from being woken up at paging occasions that do not need to be monitored, and the terminal device can be in a dormant state for a long time, thereby reducing power consumption. The terminal device obtains the available state of the TRS corresponding to the PO according to the PEI, and uses the TRS to perform auxiliary time-frequency synchronization, thereby shortening the wake-up time, thereby saving power consumption.

In orderto assist the understanding of the technical solution, a specific PEI scenario is used as an example to illustrate.

When one PF includes multiple PEls, and one DRX cycle includes multiple groups, as shown in FIG. 7, SearcheSpaceld=0, Ns=2, N=T/4, T=256, N=256/4=64, that is, when there are 256 radio frames in one DRX Cycle, there are 64 PFs in one DRX cycle, and each PF has 2 POs, then the PO in the entire DRX cycle is divided into two groups (i.e., group 1 and group 2) for PEI indication.

It should be noted that, as shown in FIG. 7, the indication information of the PEI may indicate the TRS of each PF in group 1 and group 2. As shown in FIG. 10, SearcheSpaceld=0, Ns=2, N=T/4, T=256, N=256/4=64, that is, when there are 256 radio frames in one DRX Cycle, there are 64 PFs in one DRX cycle, and each PF has 2 POs, then the PO in the entire DRX cycle is divided into two groups (i.e., group 1 and group 2) for PEI indication.

As for an embodiment shown in FIG. 10, if the PEI is DCI-based PEI, and the number of bits used for PEI indication is 48, it is given according to the scenario that one PEI can indicate L=32 PFs. The design diagram of the embodiment is only used to represent the scheduling process, and does not indicate that the scheduled PFs are parallel scheduling, that is, PF0, PF1, . . . , PF63 are arranged in chronological order. The grouping method and the indication method of PEI discontinuity indicating TRS in FIG. 10 are also applicable to FIG. 7, FIG. 8a and FIG. 8b. In FIG. 7, FIG. 8a, and FIG. 8b, the PEI can simultaneously indicate the available state of the TRS corresponding to the PO. In order to more intuitively reflect the application of the grouping method and the indication method in FIG. 10, the PEI discontinuous indication can be added in FIG. 10 to indicate the monitoring state of at least one PO of each group of PFs. Referring to FIG. 15, the PEI discontinuously indicates the monitoring state of the PO and the available state of the TRS at the position corresponding to each PF in each group.

As shown in FIG. 8a and FIG. 8b, SearcheSpaceld=1, Ns=4, N=T/2, T=256, then N=256/2=128. That is, when there are 256 radio frames in one DRX Cycle, there are 128 PFs in one DRX cycle, each PF has 4 POs, then the PO in the entire DRX cycle is divided into four groups (i.e., group 1, group 2, group 3 and group 4) for PEI indication.

The PEI is located before the corresponding PO in the first PF in the same group, and at least one PF indicated by the indication information exists in the at least one group. When the terminal device is in the RRC idle or RRC INACTIVE state, and the terminal device monitors the paging message, the network device can configure the PF grouping state, including the following.
(1) If there is only one group in one DRX cycle, one PEI is placed before each of the Ns POs of the first PF in one DRX cycle. The indication information of the PEI respectively indicates whether the PO at the corresponding position of each PF in the entire DRX cycle needs to be monitored and/or whether the corresponding TRS/CSI-RS is available. The terminal device is woken up and monitored only at paging occasions that need to be monitored, and/or when the PO needs to be monitored and TRS is available, auxiliary time-frequency synchronization is performed through TRS.
(2) If multiple DRX cycles belong to the same group, one PEI is placed before the Ns PO monitoring of the first PF of the first DRX cycle in the timing sequence. The indication information of the PEI respectively indicates whether the PO at the corresponding position of each PF in multiple DRX cycles needs to be monitored and/or whether the corresponding TRS is available. The terminal device is woken up and monitored only at paging occasions that need to be monitored, and/or when the PO needs to be monitored and TRS is available, auxiliary time-frequency synchronization is performed through TRS.
(3) If one DRX cycle contains multiple groups, one PEI is placed before the Ns PO monitoring of the first PF of each group. The indication information of the PEI respectively indicates whether the PO at the corresponding position of each PF of each group needs to be monitored and/or whether the corresponding TRS is available. The terminal device is only woken up and monitored at paging occasions that need to be monitored, and/or time-frequency synchronization is performed through TRS when the PO needs to be monitored and TRS is available.

In another embodiment, the operation S00 includes: determining the PF of at least one group in at least one DRX cycle based on the first number and/or the second number.

The first number is the number of PFs included in the DRX cycle, and the second number is the number of identifiers bearing the indication information of the PEI. It is determined which paging frames of the DRX cycle are the PF of at least one group within at least one DRX cycle according to the first number and/or the second number. For example, according to the first number and the second number, the number L of PFs in one group is determined.

For ease of understanding, assume that the first number is N, the second number is G, and the total number of radio frames in one DRX cycle is T. Based on the protocol relationship in Table 2, it can be known that the number of PFs in one group are L, and *L* = 2^{x} <= G. For scenarios where there are more than L PFs in one DRX cycle (i.e., N>L), a classification indication can be made for each L PFs to form a group. The benefit of indicating only L PFs for the entire DRX cycle is the saving of DCI bits or reference signal sequences. In this way, only L DCI bits or reference signal sequences are required at most to indicate the entire DRX cycle. The value of L depends on the number of DCI bits or the number of reference signal sequences (that is, the second number G) ultimately used to carry PEI. For example, based on *L* = 2^{x} <= G, DCI-based PEI has 48 bits (i.e., G=48), then L is 32; DCI-based PEI has 12 bits (i.e., G=12), then L is 8.

For the embodiment in FIG. 7, it is assumed that DCI-based PEI has 48 bits, and one PEI indicates 32 PFs. The design diagram of the embodiment is only used to represent the scheduling process, and does not indicate that the scheduled PFs are parallel scheduling, that is, PF0, PF1, ... , PF63 are arranged in chronological order.

According to the 38.304 and 38.331 protocols, the meanings of the Paging related parameters are summarized, as shown in Table 5. According to the possible values of high-level signaling, the number of PFs that may exist in one DRX cycle is summarized in Table 6.

It can be seen from Table 6 that there may be too much PF in one DRX cycle, in order to save the DCI bit or reference signal sequence, the classification is done according to the number of different PFs in the DRX cycle. The purpose is to use as many bits or reference signal sequences as possible to indicate the PF in the DRX cycle, so as to ensure that the terminal device can be in a dormant state for a longer time under low paging rate to reduce power consumption.

**Table 5**

| Parameter | Note |
|---|---|
| T | RRC_IDLE: min{UE-specific cycle configured by NAS, defaultPagingCycle in SIB1} |
| | RRC_INACTIVE: min{UE-specific cycle configured by NAS, defaultPagingCycle in SIB1, ran-PagingCycle carried in RRCRelease message} |
| PF_offset | This offset is used to determine PF. Its value is specified by PCCH-Config ->nAndPagingFrameOffset of SIB1 |
| N | N is used to determine how many PFs are included in each DRX cycle. Its value is specified by PCCH-Config->nAndPagingFrameOffset of SIB1, see the introduction of this field for details |
| Ns | Ns indicates how many POs correspond to each PF. Its value is specified by PCCH-Config->ns of SIB1 |
| UE_ID | UE_ID=5G-S-TMSI mod 1024_{∘} |

**Table 6**

| | | | | |
|---|---|---|---|---|
| N | 32 | 64 | 128 | 256 |
| T | | | | |
| T | 32 | 64 | 128 | 256 |
| T/2 | 16 | 32 | 64 | 128 |
| T/4 | 8 | 16 | 32 | 64 |
| T/8 | 4 | 8 | 16 | 32 |
| T/16 | 2 | 4 | 8 | 16 |

In an embodiment, the indication information is used to indicate at least one of the following situations:
indicating that at least one TRS of different PFs in at least one group is available;
monitoring at least one PO of different PFs in at least one group;
monitoring at least one PO of different PFs in at least one group and indicating that at least one TRS of different PFs in at least one group is available;
indicating that at least one TRS of different PFs in at least one group is not available;
not monitoring at least one PO of different PFs in at least one group;
not monitoring at least one PO of different PFs in at least one group and indicating that at least one TRS of different PFs in at least one group is not available;
monitoring at least one PO of different PFs in at least one group and not monitoring at least one PO of different PFs in at least one group;
indicating that at least one TRS of different PFs in at least one group is available and indicating that at least one TRS of different PFs in at least one group is not available;
monitoring at least one PO of different PFs in at least one group and indicating that at least one TRS of different PFs in at least one group is available, and not monitoring at least one PO of different PFs in at least one group and indicating that at least one TRS of different PFs in at least one group is available;
monitoring at least one PO of different PFs in at least one group and indicating that at least one TRS of different PFs in at least one group is available, and not monitoring at least one PO of different PFs in at least one group and indicating that at least one TRS of different PFs in at least one group is not available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is available;
monitoring at least one PO of different PFs in at least one group and indicating that at least one TRS of different PFs in at least one group is not available, and not monitoring at least one PO of different PFs in at least one group and indicating that at least one TRS of different PFs in at least one group is not available; and
not monitoring at least one PO of different PFs in at least one group and indicating that at least one TRS of different PFs in at least one group is available, and not monitoring at least one PO of different PFs in at least one group and indicating that at least one TRS of different PFs in at least one group is not available.

The indication situation of the indication information is further detailed:
In an embodiment, the indication information of the PEI may indicate that the terminal device performs auxiliary time-frequency synchronization based on at least one TRS of different PFs in at least one group. That is, the available state of at least one TRS of different PFs in at least one group is available. The terminal device can perform auxiliary time-frequency synchronization based on at least one TRS of different PFs in at least one group according to the available state, so as to reduce the time-consuming time-frequency synchronization and reduce the power consumption of the terminal device.

In an embodiment, the indication information of the PEI may indicate that the terminal device monitors at least one PO of different PFs in at least one group. That is, at least one PO of different PFs in at least one group needs to be monitored. The terminal device can monitor at least one PO of different PFs in at least one group according to the monitoring state, and not monitor the PO whose monitoring state is no need to be monitored, thereby reducing the number of times the terminal device wakes up and reducing the power consumption of the terminal device.

In an embodiment, the indication information of the PEI may indicate that the terminal device monitors at least one PO of different PFs in at least one group and performs auxiliary time-frequency synchronization based on at least one TRS of different PFs in at least one group. That is, at least one PO of different PFs in at least one group needs to be monitored, and the available state of at least one TRS of different PFs in at least one group is available. The terminal device can monitor at least one PO of different PFs in at least one group according to the monitoring state, so as to reduce the number of times the terminal device wakes up. The terminal device can perform auxiliary time-frequency synchronization based on at least one TRS of different PFs in at least one group according to the available state, so as to reduce the time-consuming time-frequency synchronization and reduce the power consumption of the terminal device.

In an embodiment, the indication information of the PEI may indicate that the terminal device does not perform auxiliary time-frequency synchronization based on at least one TRS of different PFs in at least one group. That is, the available state of at least one TRS of different PFs in at least one group is unavailable, and the terminal device does not perform auxiliary time-frequency synchronization based on at least one TRS of different PFs in at least one group.

In an embodiment, the indication information of the PEI may indicate that the terminal device does not monitor at least one PO of different PFs in at least one group. That is, at least one PO of different PFs in at least one group doesn't need to be monitored, and the terminal device does not monitor at least one PO of different PFs in at least one group.

In an embodiment, the indication information of the PEI may indicate that the terminal device does not monitor at least one PO of different PFs in at least one group and does not perform auxiliary time-frequency synchronization based on at least one TRS of different PFs in at least one group. That is, at least one PO of different PFs in at least one group doesn't need to be monitored, and the available state of at least one TRS of different PFs in at least one group is unavailable. The terminal device does not monitor at least one PO of different PFs in at least one group and does not perform auxiliary time-frequency synchronization based on at least one TRS of different PFs in at least one group.

In an embodiment, the indication information of the PEI may indicate that the terminal device monitors at least one PO of different PFs in at least one group and does not monitor at least one PO of different PFs in at least one group. That is, the monitoring states of multiple POs of different PFs in at least one group are that some POs need to be monitored and some POs do not need to be monitored, and the terminal device monitors at least one PO of different PFs in at least one group and does not monitor at least one PO of different PFs in at least one group.

In an embodiment, the indication information of the PEI may indicate that the terminal device performs auxiliary time-frequency synchronization based on at least one TRS of different PFs in at least one group and does not perform auxiliary time-frequency synchronization based on at least one TRS of different PFs in at least one group. That is, the available states of multiple TRSs of different PFs in at least one group are partially available and partially unavailable. The terminal device performs auxiliary time-frequency synchronization based on at least one TRS of different PFs in at least one group, and simultaneously does not perform auxiliary time-frequency synchronization based on at least one TRS of different PFs in at least one group.

In an embodiment, the indication information of the PEI may indicate that the terminal device monitors at least one PO of different PFs in at least one group and performs auxiliary time-frequency synchronization based on at least one TRS of different PFs in at least one group, and does not monitor at least one PO of different PFs in at least one group and performs auxiliary time-frequency synchronization based on at least one TRS of different PFs in at least one group. That is, the monitoring states of multiple POs of different PFs in at least one group are that some POs need to be monitored and some POs do not need to be monitored, and the available state of at least one TRS of different PFs in at least one group is available. The terminal device monitors at least one PO of different PFs in at least one group and indicates that at least one TRS of different PFs in at least one group is available, and does not monitor at least one PO of different PFs in at least one group and indicates that at least one TRS of different PFs in at least one group is available.

In an embodiment, the indication information of the PEI may indicate that the terminal device monitors at least one PO of different PFs in at least one group and performs auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is partially available and partially unavailable. The terminal device monitors at least one PO of different PFs in at least one group and indicates that at least one TRS of different PFs in at least one group is available, and does not monitor at least one PO of different PFs in at least one group and indicates that at least one TRS of different PFs in at least one group is unavailable.

In an embodiment, the indication information of the PEI may indicate that the terminal device monitors at least one PO of different PFs in at least one group and does not perform auxiliary time-frequency synchronization based on at least one TRS of different PFs in at least one group, and does not monitor at least one PO of different PFs in at least one group and performs auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is partially available and partially unavailable. The terminal device monitors at least one PO of different PFs in at least one group and indicates that at least one TRS of different PFs in at least one group is unavailable, and does not monitor at least one PO of different PFs in at least one group and indicates that at least one TRS of different PFs in at least one group is available.

In an embodiment, the indication information of the PEI may indicate that the terminal device monitors at least one PO of different PFs in at least one group and does not perform auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring states of multiple POs of different PFs in at least one group are that some POs need to be monitored and some POs do not need to be monitored, the available state of multiple TRSs of different PFs in at least one group is unavailable. The terminal device monitors at least one PO of different PFs in at least one group and indicates that at least one TRS of different PFs in at least one group is unavailable, and does not monitor at least one PO of different PFs in at least one group and indicates that at least one TRS of different PFs in at least one group is unavailable.

In an embodiment, the indication information of the PEI may indicate that the terminal device does not monitor at least one PO of different PFs in at least one group and performs auxiliary time-frequency synchronization based on at least one TRS of different PFs in at least one group, and does not monitor at least one PO of different PFs in at least one group and does not perform auxiliary time-frequency synchronization based on at least one TRS of different PFs in at least one group. That is, the monitoring state of multiple POs of different PFs in at least one group is that POs do not need to be monitored, the available state of multiple TRSs of different PFs in at least one group is partially available and partially unavailable. The terminal device does not monitor at least one PO of different PFs in at least one group and indicates that at least one TRS of different PFs in at least one group is available, and does not monitor at least one PO of different PFs in at least one group and indicates that at least one TRS of different PFs in at least one group is unavailable.

In this embodiment, the indication information of PEI can discontinuously indicate that at least one PO of different PFs in one or more groups needs to be monitored, does not need to be monitored, or, some of POs need to be monitored and some of POs do not need to be monitored. TRS is available, TRS is unavailable or part of TRS is available and part of TRS is unavailable. The indication information may cover indicating the monitoring state of PO and/or the available state of the TRS in one or more PFs. The PEI may be located before each PO in the first PF in the same group, providing an implementation of PEI discontinuity indicating at least one PO of different PFs, which saves the number of identifiers (such as DCI bits or reference signal sequences) that carry PEI, and ensures that the terminal device can be in a dormant state for a longer time and/or can perform PO demodulation for a shorter time under a low paging rate, so as to reduce power consumption.

The PEI includes the monitoring state of at least one PO of at least one PF and/or the available state of TRS within the same DRX cycle or different DRX cycles.

The operation A10 includes at least one of the following:
when the PF within the DRX cycle is configured as a single group, sending indication information in the PEI before each PO in a first PF of the single group, and indicating the monitoring state of the PO and/or the available state of the TRS at a corresponding position of each PF of the single group.

The network device (such as the base station) sends the PEI, and the terminal device parses the indication information in the PEI before each PO in the first PF of a single group one by one. The terminal device determines, according to the parsed indication information, the monitoring state of the PO and/or the available state of the TRS at the position corresponding to each PF of a single group.

When the PF within the DRX cycle is configured as multiple groups, sending indication information in the PEI before each PO in a first PF of each group, and respectively indicating the monitoring state of the PO and/or the available state of the TRS at a corresponding position of each PF of each group. The monitoring state includes that PO needs to be monitored, does not need to be monitored, or, some of POs need to be monitored and some of POs do not need to be monitored. The available state includes that TRS is available, TRS is unavailable or part of TRS is available and part of TRS is unavailable.

The network device (such as the base station) sends the PEI, and the terminal device polls by group PF, and parses the indication information in the PEI before each PO in the first PF of each group PF one by one. The terminal device determines, according to the parsed indication information, the monitoring state of the PO and/or the available state of the TRS at the position corresponding to each PF of the group where the PEI is located. That is, there are PFs in multiple groups in one DRX cycle Whether the POs at the same position of all PFs in the group are monitored for paging messages and/or whether time-frequency synchronization is performed through TRS is completed by the PEI before each PO of the first PF in each grouping PF.

The operation A10 includes at least one of the following:
when the PF within the DRX cycle is configured as a single group, sending indication information in the PEI before each PO in a first PF of the single group, and indicating the monitoring state of the PO and/or the available state of the TRS at corresponding positions of multiple non-consecutive PFs selected by a predetermined rule of the single group.

The network device (such as the base station) sends the PEI, and the terminal device parses the indication information in the PEI before each PO in the first PF of a single group one by one. The terminal device determines, according to the parsed indication information, the monitoring state and/or the available state of the TRS of POs at positions corresponding to multiple non-consecutive PFs selected by the predetermined rule of a single group.

When the PF within the DRX cycle is configured as multiple groups, sending indication information in the PEI before each PO in a first PF of each group, and respectively indicating the monitoring state of the PO and/or the available state of the TRS at corresponding positions of multiple non-consecutive PFs selected by a predetermined rule of each group.

The network device (such as the base station) sends the PEI, and the terminal device polls by grouped PF, and parses the indication information in the PEI before each PO in the first PF of each grouped PF one by one. The terminal device determines, according to the parsed indication information, the monitoring state of POs and/or the available state of the TRS at positions corresponding to multiple non-consecutive PFs selected by the predetermined rule of the group PF where the PEI is located. That is, there are multiple PFs in one DRX cycle. The indication of the PO monitoring state at the same position of multiple non-consecutive PFs in the group and/or the available state of the TRS at the position corresponding to the PO is completed by each pre-PO PEI of the first PF in each grouped PF.

The predetermined rule may be to determine a plurality of non-consecutive PFs by selecting the odd and even numbers of the PF sequence numbers in the group, selecting the arithmetic sequence, or the like. Different from each continuous PF in the group, the predetermined rule selects multiple non-consecutive PFs to apply to the situation of a single group and multiple groups.

In a feasible manner of the preset rule, the preset rule is an odd-even selection method. That is, the PF with odd or even sequence number is selected in a group, to parse the PEls before the POs before the first PF in the group, and determine the monitoring state of PO and/or the available state of TRS at positions corresponding to multiple non-consecutive PFs with odd or even sequence numbers.

In an embodiment, the preset rule is to select multiple non-consecutive PFs with odd sequence numbers. Referring to FIG. 16, a group includes 6 PFs, and each PF has 2 POs. The PFs in the group are PF0, PF1, PF2, PF3, PF4, and PF5, respectively. The PEI before PO0 and PO1 in the first PF0 of this group discontinuously indicates the monitoring state of PO and the available state of TRS at the corresponding positions in PF1, PF3, and PF5. It should be noted that, in this optional embodiment, a detailed explanation for selecting a plurality of non-consecutive PFs only for the preset rule may include but not limited to 6 PFs, and also include but not limited to 2 POs per PF.

In an embodiment, the preset rule is to select multiple non-consecutive PFs with even sequence numbers. For example, a group includes 12 PFs. The PEI of the first PF in the group discontinuously indicates the monitoring state of the PO and/or the available state of the TRS at the corresponding positions of PF2, PF4, PF6, PF8, PF10, and PF12.

In an embodiment, the preset rule is to select multiple non-consecutive PFs whose sequence numbers are arithmetic progressions. For example, a group includes 12 PFs, the arithmetic sequence is a sequence with the first item 0 and the tolerance is 3, and the arithmetic sequence is 0, 3, 6, 9, 12. Therefore, the PEI of the first PF in the group discontinuously indicates the monitoring state the PO and/or the available state of the TRS at the corresponding positions of PF3, PF6, PF9, and PF12.

The operation A10 includes sending a PEI corresponding to a PO in at least one group of PFs of at least one DRX cycle.

The PEI of the corresponding PO in at least one group of PFs of at least one DRX cycle is sent to the terminal device.

The process of sending the PEI by the network device may include at least one of the following:
when the PF within the DRX cycle is configured as a single group, sending indication information in the PEI before each PO in a first PF of the single group, and indicating the monitoring state of the PO and/or the available state of the TRS at corresponding positions of multiple non-consecutive PFs selected by a predetermined rule of the single group; and
when the PF within the DRX cycle is configured as multiple groups, sending indication information in the PEI before each PO in a first PF of each group, and respectively indicating the monitoring state of the PO and/or the available state of the TRS at corresponding positions of multiple non-consecutive PFs selected by a predetermined rule of each group.
   Or,
when the PF within the DRX cycle is configured as a single group, sending indication information in the PEI before each PO in a first PF of the single group, and indicating the monitoring state of the PO and/or the available state of the TRS at corresponding positions of multiple non-consecutive PFs selected by a predetermined rule of the single group; and
when the PF within the DRX cycle is configured as multiple groups, sending indication information in the PEI before each PO in a first PF of each group, and respectively indicating the monitoring state of the PO and/or the available state of TRS at positions corresponding to a plurality of non-consecutive PFs selected by the predetermined rule of each group.

In an embodiment, the method includes at least one of the following:
sending the paging message at the paging occasion;
sending the tracking reference signal at the paging occasion;
sending the paging message and the tracking reference signal at the paging occasion;
not sending the paging message at the paging occasion;
not sending the tracking reference signal at the paging occasion;
not sending the paging message and the tracking reference signal at the paging occasion;
sending the paging message and not sending the tracking reference signal at the paging occasion; and
sending the tracking reference signal and not sending the paging message at the paging occasion.

The network device sends PEI before PO, and the network device further includes at least one of the following:
The network device sends a paging message at the paging occasion, so that the terminal device can monitor the PO according to the identification unit of the indication information of the PEl;
The network device sends the TRS at the paging occasion, so that the terminal device can perform TRS synchronization according to the identification unit of the indication information of the PEl;
The network device sends a paging message and a TRS at the paging occasion, so that the terminal device can monitor the PO and perform TRS synchronization according to the identification unit of the indication information of the PEl;
The network device does not send a paging message at the paging occasion, so that the terminal device does not monitor the PO according to the identification unit of the indication information of the PEl;
The network device does not send TRS at the paging occasion, so that the terminal device does not perform TRS synchronization according to the identification unit of the indication information of the PEl;
The network device does not send a paging message and does not send a TRS at the paging occasion, so that the terminal device does not monitor the PO and does not perform TRS synchronization according to the identification unit of the indication information of the PEl;
The network device sends the paging message at the paging occasion and does not send the TRS, so that the terminal device monitors the PO and does not synchronize the TRS according to the identification unit of the indication information of the PEl;
The network device sends TRS and does not send a paging message at the paging occasion, so that the terminal device does not monitor the PO and performs TRS synchronization according to the identification unit of the indication information of the PEI.

Regarding the indication information in the network device configuration PEI, the following specific examples are used to explain.

When the PEI is DCI-based, multiple bits in PEI discontinuously indicate the monitoring state of POs at the same position of multiple PFs. That is, if the identification unit (such as a bit) of the indication information is the first value (such as 1), the PO indicated by this identification unit needs to be monitored, and the PDCCH and/or PDSCH of the PO indicated by this identification unit are monitored. If the identification unit (such as a bit) of the indication information is the second value (such as 0), the PO indicated by the identification unit doesn't need to be monitored, and the PDCCH and/or PDSCH of the PO indicated by the identification unit are not monitored.

For example, PEI is 0101, that is, the identification unit of the indication information is 0101, which in turn discontinuously indicates PO1 at the same position in PF0, PF1, PF2 and PF3. Then, the PDCCH and/or PDSCH of PO1 of PF0 are not monitored, the PDCCH and/or PDSCH of PO1 of PF1 are monitored, the PDCCH and/or PDSCH of PO1 of PF2 are not monitored, and the PDCCH and/or PDSCH of PO1 of PF3 are monitored.

When the indication information of PEI is a reference signal sequence, the identification unit (e.g., subsequence) of the reference signal sequence is the first value, the PDCCH and/or PDSCH of the PO indicated by the identification unit is monitored; the identification unit (e.g., subsequence) of the reference signal sequence is the second value, and the PDCCH and/or PDSCH of the PO indicated by the identification unit are not monitored.

Based on the same principle, when TRS available information is carried by the multiple bits of DCI-based PEI, the multiple bits of the indication information indicate the available state of the TRS corresponding to the PO at the same position of the multiple PFs. If the identification unit (such as a bit) of the indication information is the first value (such as 1), the available state of the TRS corresponding to the PO indicated by this identification unit is available, and it is determined that the TRS corresponding to the PO indicated by this identification unit is applied to the auxiliary time-frequency synchronization before the PO demodulation. If the identification unit (such as a bit) of the indication information is the second value (such as 0), the available state of the TRS corresponding to the PO indicated by the identification unit is unavailable, and it is determined that the TRS corresponding to the PO indicated by the identification unit is not used for auxiliary time-frequency synchronization before PO demodulation.

For example, PEI is 0101. That is, the identification unit of the indication information is 0101, which in turn discontinuously indicates the TRS at the same position in PF0, PF1, PF2 and PF3, then the TRS corresponding to PO1 of PF0 is unavailable, the TRS corresponding to PO1 of PF1 is available, the TRS corresponding to PO1 of PF2 is unavailable, and the TRS corresponding to PO1 of PF3 is available.

When the TRS available information is carried by sequence-based PEI, the identification unit (such as a subsequence) of the reference signal sequence is the first value, then the TRS corresponding to the PO indicated by the identification unit can be available and can be applied to time-frequency synchronization before PO demodulation. If the identification unit (such as a subsequence) of the reference signal sequence is the second value, the TRS corresponding to the PO indicated by the identification unit is unavailable.

When the identification unit of PEI is used to indicate both the monitoring state of PO and the available state of TRS, the PEI indication information is explained as follows (taking DCI-based PEI as an example, Sequence-based PEI has the same analysis).

For example, PEI is 01010001. That is, the identification unit of PO monitoring state indication information (that is, PO indication) is 0101, and the identification unit of TRS available state indication information (that is, TRS available indication) is 0001. PEI successively indicates PO1 at the same position in PF0, PF1, PF2 and PF3, PO1 of PF0 is not monitored and the TRS corresponding to PO1 of PF0 is unavailable, PO1 of PF1 is monitored and the TRS corresponding to PO1 of PF1 is unavailable, PO1 of PF2 is not monitored and the TRS corresponding to PO1 of PF2 is unavailable, PO1 of PF3 is monitored and the TRS corresponding to PO1 of PF3 is available and can be applied to auxiliary time-frequency synchronization before PO demodulation.

When the PF included in the DRX cycle contains only one PO, that is, Ns=1, and the number of PFs is relatively small, for example, the number of PFs is 2, 4, 8, etc., Then, it is only necessary to place a PEI carrying a TRS available indication (i.e., TRS available state related indication information) before at least one PO of the first PF to indicate the available state of TRS in the entire DRX cycle.

When the available indication ofTRS corresponding to each PO is random, and each PF in the DRX cycle contains at least one PO, and the number of PFs in the DRX cycle is relatively large. For example, there are 128 PFs in each DRX cycle, etc. The PFs in the entire DRX cycle need to be grouped according to the bits that the PEI can represent, and the PEI is only placed before each PO in the first PF of each group to indicate the available state of TRS in the entire group.

In the present disclosure, the PEI can indicate only the monitoring state of the PO, or only the available state of the TRS corresponding to the PO, or can simultaneously indicate both the monitoring state of the PO and the available state of the TRS corresponding to the PO. As shown in FIG. 11a and FIG. 11b, a technical solution in which the PEI simultaneously indicates the monitoring state of the PO and the available state of the TRS is given, and the example takes DCI-based as an example, and the design of Sequence-based PEI has the same technical solution. The above-mentioned embodiments and the examples of FIG. 5 to FIG. 10 provide a schematic diagram in which the PEI only indicates the monitoring state of the PO or the PEI only indicates the available state of the TRS corresponding to the PO. In fact, the PEI can also simultaneously indicate the monitoring state of the PO and the available state of the TRS, as shown in the examples of FIG. 14 to FIG. 16.

The purpose of the TRS available indication is to make the terminal device know in advance whether the TRS exists, and when PO demodulation needs to be performed, it is used to assist the SSB to achieve better downlink synchronization, thereby ensuring the success rate of PO demodulation. Based on this, this patent also proposes that whether the TRS available indication needs to be indicated can be determined according to whether the PO in the PEI needs to be monitored. That is, if the bit indicating the monitoring state of PO in the PEI is 0, that is, there is no need to monitor the PO, the TRS available indication does not need to occupy the bit, and can be replaced by a preset reserved bit. In this way, the PEI indication bit can be further saved. The design scheme is also applicable to SSS-based orTRS-based PEI.

As shown in FIG. 11a, assuming that PEI indicates the bit indicated by PO: 0 means that there is no need to monitor this PO, 1 means that this PO needs to be monitored. TRS available indication in PEI: 0 bit means that TRS is not available, 1 means that TRS is available, reserved bit means that the current bit does not need to be occupied for the time being. As shown in FIG. 11b, the TRS available indication given in the PEI is valid only when the PO needs to be monitored. The bit design in FIG. 11b is that one PO indication corresponds to one TRS available indication, but only when the bit indicated by PO is 1, the TRS available indication needs to be parsed for availability and unavailability.

The present disclosure further provides a terminal device. The terminal device includes a memory and a processor. A computer program is stored in the memory, and when the computer program is executed by the processor, the operations of each embodiment of the above processing method are implemented.

The present disclosure further provides a network device. The network device includes a memory and a processor. A computer program is stored in the memory, and when the computer program is executed by the processor, the operations of each embodiment of the above-mentioned processing method are implemented.

The present disclosure further provides a computer-readable storage medium. A computer program is stored on the computer-readable storage medium, and when the computer program is executed by the processor, the operations of the above-mentioned processing method are implemented.

The embodiments of the terminal device, network device, and computer-readable storage medium provided in the present disclosure may include all the technical features of any of the foregoing processing method embodiments. The expanded and explained contents of the description are basically the same as those of the embodiments of the above method, and will not be repeated here.

Embodiments of the present disclosure further provide a computer program product, and the computer program product includes computer program code. The computer program code, when run on a computer, causes the computer to perform the methods in the various possible embodiments above.

Embodiments of the present disclosure further provide a chip, including a memory and a processor, and the memory is used to store a computer program. The processor is used to call and run a computer program from the memory, so that the device on which the chip is installed performs the method in the various possible embodiments as described above.

It can be understood that the above scenario is only an example, and does not constitute a limitation on the application scenarios of the technical solutions provided in the embodiments of the present disclosure, and the technical solutions of the present disclosure can also be applied to other scenarios. For example, those of ordinary skill in the art know that with the evolution of the system architecture and the emergence of new business scenarios, the technical solutions provided in the embodiments of the present disclosure are also applicable to similar technical problems.

The above-mentioned serial numbers of the embodiments of the present disclosure are only for description, and do not represent the advantages or disadvantages of the embodiments.

The steps in the method of the embodiment of the present disclosure may be adjusted, combined and deleted in sequence according to actual needs.

Units in the device of this embodiment of the present disclosure may be combined, divided, and deleted according to actual needs.

In the present disclosure, the description of the same or similar term concepts, technical solutions and/or application scenarios is only described in detail when it first appears, and when it appears again later, for the sake of brevity, it is generally not repeated. When understanding the technical solutions and other contents of the present disclosure, for the same or similar term concepts, technical solutions and/or application scenario descriptions, etc. that are not described in detail later, reference may be made to the relevant detailed descriptions described before.

In the present disclosure, the description of each embodiment has its own emphasis. For parts that are not described or described in detail in a certain embodiment, reference may be made to the relevant descriptions of other embodiments.

The technical features of the technical solutions of the present disclosure can be combined arbitrarily. In order to simplify the description, all possible combinations of the technical features in the above embodiments are not described. However, as long as there is no contradiction in the combination of these technical features, it should be regarded as the scope of the description of the present disclosure.

Through the description of the above embodiment, those skilled in the art can clearly understand that the methods of the above embodiments can be implemented by means of software plus a necessary general hardware platform, and certainly can also be implemented by means of hardware, but in many cases the former is a better implementation. Based on this understanding, the technical solutions of the present disclosure can be embodied in the form of software products in essence or in other words, the parts that make contributions to the prior art. The computer software product is stored in a storage medium (such as ROM/RAM, magnetic disk, optical disk) as above, several instructions are included to enable a terminal device (which may be a mobile phone, a computer, a server, a controlled terminal, or a network device, etc.) to execute the method of each embodiment of the present disclosure.

In the above-mentioned embodiments, it may be implemented in whole or in part by software, hardware, firmware or any combination thereof. When implemented in software, it can be implemented in whole or in part in the form of a computer program product. A computer program product includes one or more computer instructions. When the computer program instructions are loaded and executed on a computer, the procedures or functions according to the embodiments of the present application are generated in whole or in part. The computer may be a general purpose computer, a special purpose computer, a computer network, or other programmable device. Computer instructions may be stored in or transmitted from one computer-readable storage medium to another computer-readable storage medium. For example, computer instructions may be transmitted by wire (e.g. coaxial cable, optical fiber, digital subscriber line) or wireless (e.g., infrared, wireless, microwave, etc.) from one website site, computer, server, or data center to another website site, computer, server, or data center. A computer-readable storage medium can be any available medium that can be accessed by a computer or a data storage device such as a server, a data center, or the like that includes an integration of one or more available media. Available media may be magnetic media (e.g., floppy disks, storage disks, magnetic tapes), optical media (e.g., DVDs), or semiconductor media (e.g., Solid State Disk (SSD)), or the like.

The above are only some embodiments of the present disclosure and are not intended to limit the scope of the present disclosure. Any equivalent structure or equivalent process transformation made by using the contents of the description and drawings of the present disclosure, or directly or indirectly applied in other related technical fields, are similarly included in the scope of the present disclosure.

## Claims

1. A processing method, applied to a terminal device, **characterized by** comprising following operations:
S10, receiving a paging early indication;
S20, indicating a monitoring state of at least one paging occasion of at least one paging frame and/or an available state of tracking reference signal according to the paging early indication; and
S30, determining whether to monitor a paging message according to the monitoring state, and/or determining whether to perform time-frequency synchronization through the tracking reference signal according to the available state of the tracking reference signal.

2. The method according to claim 1, wherein before the operation S10, the method further comprises:
S00, determining a paging frame of at least one group within at least one discontinuous reception cycle.

3. The method according to claim 2, wherein the operation S100 comprises:
determining the paging frame of at least one group within at least one discontinuous reception cycle based on a first number and/or a second number.

4. The method according to claim 2, wherein the operation S30 comprises at least one of the following:
indicating that at least one tracking reference signal of different paging frames in at least one group is available;
monitoring at least one paging occasion of different paging frames in at least one group;
monitoring at least one paging occasion of different paging frames in at least one group and indicating that at least one tracking reference signal of different paging frames in at least one group is available;
indicating that at least one tracking reference signal of different paging frames in at least one group is not available;
not monitoring at least one paging occasion of different paging frames in at least one group;
not monitoring at least one paging occasion of different paging frames in at least one group and indicating that at least one tracking reference signal of different paging frames in at least one group is not available;
monitoring at least one paging occasion of different paging frames in at least one group and not monitoring at least one paging occasion of different paging frames in at least one group;
indicating that at least one tracking reference signal of different paging frames in at least one group is available and indicating that at least one tracking reference signal of different paging frames in at least one group is not available;
monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is available;
monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is not available;
monitoring at least one paging occasion of different paging frames in at least one group and indicating that at least one tracking reference signal of different paging frames in at least one group is not available, and not monitoring at least one paging occasion of different paging frames in at least one group and indicating that at least one tracking reference signal of different paging frames in at least one group is available;
monitoring at least one paging occasion of different paging frames in at least one group and indicating that at least one tracking reference signal of different paging frames in at least one group is not available, and not monitoring at least one paging occasion of different paging frames in at least one group and indicating that at least one tracking reference signal of different paging frames in at least one group is not available; and
not monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is not available.

5. The method according to claim 2, wherein the operation S20 comprises:
S21, determining the monitoring state of at least one paging occasion of at least one paging frame and/or the available state of the tracking reference signal within a same discontinuous reception cycle or different discontinuous reception cycles according to the paging early indication.

6. The method according to claim 5, wherein the operation S21 comprises at least one of the following:
when the paging frame within the discontinuous reception cycle is configured as a single group, parsing indication information in the paging early indication before each paging occasion in a first paging frame of the single group, and determining the monitoring state of the paging occasion and/or the available state of the tracking reference signal at a corresponding position of each paging frame of the single group; and
when the paging frame within the discontinuous reception cycle is configured as multiple groups, parsing indication information in the paging early indication before each paging occasion in a first paging frame of each group, and respectively determining the monitoring state of the paging occasion and/or the available state of the tracking reference signal at a corresponding position of each paging frame of each group.

7. The method according to claim 5, wherein the operation S21 comprises at least one of the following:
when the paging frame within the discontinuous reception cycle is configured as a single group, parsing indication information in the paging early indication before each paging occasion in a first paging frame of the single group, and determining the monitoring state of the paging occasion and/or the available state of the tracking reference signal at corresponding positions of multiple non-consecutive paging frames selected by a predetermined rule of the single group; and
when the paging frame within the discontinuous reception cycle is configured as multiple groups, parsing indication information in the paging early indication before each paging occasion in a first paging frame of each group, and respectively determining the monitoring state of the paging occasion and/or the available state of the tracking reference signal at corresponding positions of multiple non-consecutive paging frames selected by a predetermined rule of each group.

8. The method according to any one of claims 2 to 7, wherein the operation S10 comprises:
receiving a paging early indication corresponding to a paging occasion in at least one group of paging frames of at least one discontinuous reception cycle.

9. The method according to any one of claims 1 to 7, wherein the operation S30 comprises at least one of the following:
in response to the indication information identification unit in the paging early indication, monitoring the paging occasion;
in response to the indication information identification unit in the paging early indication, synchronizing via the tracking reference signal;
in response to the indication information identification unit in the paging early indication, monitoring the paging occasion and synchronizing via the tracking reference signal;
in response to the indication information identification unit in the paging early indication, not monitoring the paging occasion;
in response to the indication information identification unit in the paging early indication, not synchronizing via the tracking reference signal; and
in response to the indication information identification unit in the paging early indication, not monitoring the paging occasion and not synchronizing via the tracking reference signal.

10. A processing method, applied to a terminal device, **characterized by** comprising following operations:
S100, when grouping information and indication information meet a preset condition, determining a monitoring state of at least one paging occasion of a paging frame of at least one group and/or an available state of tracking reference signal according to the grouping information and the indication information; and
S200, determining whether to monitor a paging message according to the monitoring state, and/or determining whether to perform time-frequency synchronization through the tracking reference signal according to the available state of the tracking reference signal.

11. The method according to claim 10, wherein the method for determining or generating the grouping information comprises at least one of the following:
determining a paging frame of at least one group within at least one discontinuous reception cycle; and
generating the paging frame of at least one group within at least one discontinuous reception cycle based on a first number and/or a second number.

12. The method according to claim 10, wherein meeting the preset condition comprises at least one of the following:
at least one paging frame indicated by the indication information exists in the at least one group; and
the paging early indication carrying the indication information is before a corresponding paging occasion in a first paging frame in a same group.

13. The method according to claim 10, wherein the operation S200 comprises at least one of the following:
indicating that at least one tracking reference signal of different paging frames in at least one group is available;
monitoring at least one paging occasion of different paging frames in at least one group;
monitoring at least one paging occasion of different paging frames in at least one group and indicating that at least one tracking reference signal of different paging frames in at least one group is available;
indicating that at least one tracking reference signal of different paging frames in at least one group is not available;
not monitoring at least one paging occasion of different paging frames in at least one group;
not monitoring at least one paging occasion of different paging frames in at least one group and indicating that at least one tracking reference signal of different paging frames in at least one group is not available;
monitoring at least one paging occasion of different paging frames in at least one group and not monitoring at least one paging occasion of different paging frames in at least one group;
indicating that at least one tracking reference signal of different paging frames in at least one group is available and indicating that at least one tracking reference signal of different paging frames in at least one group is not available;
monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is available;
monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is not available;
monitoring at least one paging occasion of different paging frames in at least one group and indicating that at least one tracking reference signal of different paging frames in at least one group is not available, and not monitoring at least one paging occasion of different paging frames in at least one group and indicating that at least one tracking reference signal of different paging frames in at least one group is available;
monitoring at least one paging occasion of different paging frames in at least one group and indicating that at least one tracking reference signal of different paging frames in at least one group is not available, and not monitoring at least one paging occasion of different paging frames in at least one group and indicating that at least one tracking reference signal of different paging frames in at least one group is not available; and
not monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is not available.

14. The method according to any one of claims 10 to 13, wherein the operation S100 comprises:
S101, determining the paging frame of at least one group within at least one discontinuous reception cycle according to the grouping information; and
S102, determining the monitoring state of at least one paging occasion of at least one paging frame of at least one group and/or the available state of the tracking reference signal within a same discontinuous reception cycle or different discontinuous reception cycles according to the indication information.

15. The method according to claim 14, wherein the operation S102 comprises at least one of the following:
when the paging frame within the discontinuous reception cycle is configured as a single group, parsing indication information in the paging early indication before each paging occasion in a first paging frame of the single group, and determining the monitoring state of the paging occasion and/or the available state of the tracking reference signal at a corresponding position of each paging frame of the single group; and
when the paging frame within the discontinuous reception cycle is configured as multiple groups, parsing indication information in the paging early indication before each paging occasion in a first paging frame of each group, and respectively determining the monitoring state of the paging occasion and/or the available state of the tracking reference signal at a corresponding position of each paging frame of each group.

16. The method according to claim 14, wherein the operation S102 comprises at least one of the following:
when the paging frame within the discontinuous reception cycle is configured as a single group, parsing indication information in the paging early indication before each paging occasion in a first paging frame of the single group, and determining the monitoring state of the paging occasion and/or the available state of the tracking reference signal at corresponding positions of multiple non-consecutive paging frames selected by a predetermined rule of the single group; and
when the paging frame within the discontinuous reception cycle is configured as multiple groups, parsing indication information in the paging early indication before each paging occasion in a first paging frame of each group, and respectively determining the monitoring state of the paging occasion and/or the available state of the tracking reference signal at corresponding positions of multiple non-consecutive paging frames selected by a predetermined rule of each group.

17. The method according to any one of claims 10 to 13, wherein the operation S200 comprises at least one of the following:
in response to the indication information identification unit, monitoring the paging occasion;
in response to the indication information identification unit,, synchronizing via the tracking reference signal;
in response to the indication information identification unit, monitoring the paging occasion and synchronizing via the tracking reference signal;
in response to the indication information identification unit, not monitoring the paging occasion;
in response to the indication information identification unit, not synchronizing via the tracking reference signal; and
in response to the indication information identification unit, not monitoring the paging occasion and not synchronizing via the tracking reference signal.

18. A processing method, applied to a network device, **characterized by** comprising following operations:
A10, sending a paging early indication to a terminal device, to make a terminal device determine a monitoring state of at least one paging occasion of at least one paging frame and/or an available state of tracking reference signal according to indication information in the paging early indication;
the monitoring state is configured to indicate whether to monitor a paging message, and/or the available state of the tracking reference signal is configured to indicate whether to perform time-frequency synchronization through the tracking reference signal.

19. The method according to claim 18, wherein before the operation A10, the method further comprises:
A00, determining a grouping state of at least one discontinuous reception cycle.

20. The method according to claim 19, wherein the operation A00 comprises:
determining a paging frame of at least one group within at least one discontinuous reception cycle based on a first number and/or a second number.

21. The method according to claim 19, wherein the indication information is configured to indicate at least one of the following situations:
indicating that at least one tracking reference signal of different paging frames in at least one group is available;
monitoring at least one paging occasion of different paging frames in at least one group;
monitoring at least one paging occasion of different paging frames in at least one group and indicating that at least one tracking reference signal of different paging frames in at least one group is available;
indicating that at least one tracking reference signal of different paging frames in at least one group is not available;
not monitoring at least one paging occasion of different paging frames in at least one group;
not monitoring at least one paging occasion of different paging frames in at least one group and indicating that at least one tracking reference signal of different paging frames in at least one group is not available;
monitoring at least one paging occasion of different paging frames in at least one group and not monitoring at least one paging occasion of different paging frames in at least one group;
indicating that at least one tracking reference signal of different paging frames in at least one group is available and indicating that at least one tracking reference signal of different paging frames in at least one group is not available;
monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is available;
monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is not available;
monitoring at least one paging occasion of different paging frames in at least one group and indicating that at least one tracking reference signal of different paging frames in at least one group is not available, and not monitoring at least one paging occasion of different paging frames in at least one group and indicating that at least one tracking reference signal of different paging frames in at least one group is available;
monitoring at least one paging occasion of different paging frames in at least one group and indicating that at least one tracking reference signal of different paging frames in at least one group is not available, and not monitoring at least one paging occasion of different paging frames in at least one group and indicating that at least one tracking reference signal of different paging frames in at least one group is not available; and
not monitoring at least one paging occasion of different paging frames in at least one group and indicating that at least one tracking reference signal of different paging frames in at least one group is available, and not monitoring at least one paging occasion of different paging frames in at least one group and indicating that at least one tracking reference signal of different paging frames in at least one group is not available.

22. The method according to claim 19, wherein the paging early indication comprises:
the monitoring state of at least one paging occasion of at least one paging frame and/or the available state of tracking reference signal within a same discontinuous reception cycle or different discontinuous reception cycles.

23. The method according to claim 22, wherein the operation A10 comprises at least one of the following:
when the paging frame within the discontinuous reception cycle is configured as a single group, sending indication information in the paging early indication before each paging occasion in a first paging frame of the single group, and indicating the monitoring state of the paging occasion and/or the available state of the tracking reference signal at a corresponding position of each paging frame of the single group; and
when the paging frame within the discontinuous reception cycle is configured as multiple groups, sending indication information in the paging early indication before each paging occasion in a first paging frame of each group, and respectively indicating the monitoring state of the paging occasion and/or the available state of the tracking reference signal at a corresponding position of each paging frame of each group.

24. The method according to claim 22, wherein the operation A10 comprises at least one of the following:
when the paging frame within the discontinuous reception cycle is configured as a single group, sending indication information in the paging early indication before each paging occasion in a first paging frame of the single group, and indicating the monitoring state of the paging occasion and/or the available state of the tracking reference signal at corresponding positions of multiple non-consecutive paging frames selected by a predetermined rule of the single group; and
when the paging frame within the discontinuous reception cycle is configured as multiple groups, sending indication information in the paging early indication before each paging occasion in a first paging frame of each group, and respectively indicating the monitoring state of the paging occasion and/or the available state of the tracking reference signal at corresponding positions of multiple non-consecutive paging frames selected by a predetermined rule of each group.

25. The method according to any one of claims 19 to 24, wherein the operation A10 comprises:
sending a paging early indication corresponding to a paging occasion in at least one group of paging frames of at least one discontinuous reception cycle.

26. The method according to any one of claims 18 to 24, wherein the method comprises at least one of the following:
sending the paging message at the paging occasion;
sending the tracking reference signal at the paging occasion;
sending the paging message and the tracking reference signal at the paging occasion;
not sending the paging message at the paging occasion;
not sending the tracking reference signal at the paging occasion;
not sending the paging message and the tracking reference signal at the paging occasion;
sending the paging message and not sending the tracking reference signal at the paging occasion; and
sending the tracking reference signal and not sending the paging message at the paging occasion.

27. A terminal device, **characterized by** comprising: a memory and a processor, wherein a computer program is stored in the memory, and when the computer program is executed by the processor, the operations of the processing method according to any one of claims 1 to 17 are implemented.

28. A network device, **characterized by** comprising: a memory and a processor, wherein a computer program is stored in the memory, and when the computer program is executed by the processor, the operations of the processing method according to any one of claims 18 to 26 are implemented.

29. A computer readable storage medium, wherein a computer program is stored in the computer readable storage medium, and when the computer program is executed by a processor, the operations of the processing method according to any one of claims 1 to 26 are implemented.
